# EUROPEAN PATENT SPECIFICATION

(11) **EP 3 310 175 B1**
(45) Date of publication and mention of the grant of the patent: **26.08.2026**
(21) Application number: 16731094.5
(22) Date of filing: 16.06.2016
(51) Int. Cl.: A21D 13/00, A23K 10/00, A21D 2/10, A21D 2/18, A21D 8/02, A21D 10/04, A23L 7/10, A23L 29/30

(54) **WAFER PRODUCT, BATTER FOR WAFER PRODUCT, METHOD FOR MAKING A WAFER PRODUCT**
WAFFELPRODUKT, TEIG FÜR WAFFELPRODUCT, VERFAHREN ZUR HERSTELLUNG EINES WAFFELPRODUKTS
PRODUIT DE TYPE GAUFRETTE, PATE POUR PRODUIT DE TYPE GAUFRETTE, PROCÉDÉ DE FABRICATION D'UN PRODUIT TYPE GAUFRETTE

(30) Priority: 16.06.2015 EP 15172376
(43) Date of publication of application: 25.04.2018
(73) Proprietor: Société des Produits Nestlé S.A., 1800 Vevey (CH)
(72) Inventor: POWELL, Hugh, York Yorkshire Y032 5UP (GB); JARRY, Pascal, York Yorkshire YO41 1QX (GB); ABU-HARDAN, Madian Othman, York Yorkshire YO32 9LI (GB)
(74) Representative: Slaven, John William
(86) International application number: PCT/EP2016/063855
(87) International publication number: WO 2016/202913

(56) References cited:
- WO-A1-2008/129027
- WO-A1-2016/055426
- WO-A2-02/39820
- GB-A- 1 240 557
- HU-B- 214 189
- US-A- 4 759 939
- US-A- 4 803 084
- US-A- 4 880 653
- DATABASE GNPD [online] MINTEL; March 2004 (2004-03-01), ANONYMOUS: "BAKING MIXES", XP002751261, Database accession no. 263254
- ANONYMOUS: "Nutritive Sweeteners from Corn", vol. 8th edition, 2006, pages 1 - 34, XP002751262, Retrieved from the Internet <URL:http://corn.org/wp-content/uploads/2009/12/NSFC2006.pdf> [retrieved on 20151123]
- ANONYMOUS: "Pie crust, cookie-type, prepared from recipe, vanilla wafer, chilleddensity in 285 measurement units", 6 September 2016 (2016-09-06), pages 1 - 4, XP002761539, Retrieved from the Internet <URL:http://www.aqua-calc.com/page/density-table/substance/pie-blank-crust-coma-and-blank-cookie-type-coma-and-blank-prepared-blank-from-blank-recipe-coma-and-blank-vanilla-blank-wafer-coma-and-blank-chilled> [retrieved on 20160906]
- LAURENT CHAUNIER ET AL: "Permeability and Expanded Structure of Baked Products Crumbs", FOOD BIOPHYSICS, vol. 3, no. 4, 18 March 2008 (2008-03-18), Boston, pages 344 - 351, XP055300311, ISSN: 1557-1858, DOI: 10.1007/s11483-008-9073-8
- DATABASE FSTA [online] INTERNATIONAL FOOD INFORMATION SERVICE (IFIS), FRANkFURT-MAIN, DE; BERNSHTEIN T S ET AL: "Technology of cracker manufacture on an A2-SLU line. (translated)", XP002761540, Database accession no. FS-1987-08-M-0091
- KHLEBOPEKARNAYA I KONDITERSKAYA PROMYSHLENNOST', no. No. 4, 1986, pages 37 - 39

## Description

The present invention relates to the field of baked wafers that comprise certain starch derived saccharide(s). The invention also relates to batters to make such products. One special embodiment of the invention relates to wafers with good moisture resistance preferably such that the wafers remain crispy even at medium to high water activities.

The background of this invention is also set out in the applicant's patent application WO2009/149948 as described on page 1 line 8 to page 4 line 30.

Wafers are baked products which are made from wafer batter and have crisp, brittle and fragile consistency. They are thin, with an overall thickness usually from 1 to 4 mm and typical product densities range from 0.1 to 0.4 g / cm³. Wafers are prepared from baking a batter which is a flowable liquid suspension containing mainly flour (typically 30 to 60% by weight) and water to which other minor ingredients may be added (such as described in WO2009/149948). The present invention preferably relates to "no or low added sugar' products as described for wafers in WO2009/149948 on page 2, lines 3 to 16. Wafer products of the invention may be prepared as described therein. Similar definitions of no or low sugar extruded cereal products are used herein to those used for no or low sugar wafers.

Two basic types of wafer are described by K.F. Tiefenbacher in "Encyclopaedia of Food Science, Food Technology and Nutrition p 417-420 - Academic Press Ltd London - 1993":
No- or low-sugar wafers are defined herein as those where the finished product contains from zero to a low percentage of sucrose or other sugars. Preferred low sugar wafers are those where the total amount of total sugars present in the wafer is less than 10%, more preferably less than 8%, even more preferably less than 5%, most preferably less than 4%, by weight of the dry wafer. Typical no or low sugar wafer products are flat and hollow wafer sheets, moulded cones or fancy shapes. High-sugar wafers are defined as those where more than 10 % of sucrose or other sugars are responsible for the plasticity of the freshly baked sheets. They can be formed into different shapes before sugar recrystallization occurs. Typical high sugar wafer products are moulded and rolled sugar cones, rolled wafer sticks and deep-formed fancy shapes. No- or low sugar wafers have a different texture and taste compared to high sugar wafers. When layered with a filling, no or low sugar wafers are used as the centre of well-known chocolate confectionery products such as those sold by the applicant under the registered trade mark KitKat^{®}.

If the water content of a wafer increases beyond a certain level it is known that the wafer suffers a dramatic deterioration in textural quality, losing crispness and becoming cardboard-like and non-brittle which is perceived by consumers as an unacceptable sogginess. Thus it is desired that the wafers stay crisp as long as possible when exposed to high levels of moisture from the external environment or other ingredients in the wafer products e.g. in the filling.

It is not realistic to lower the water activity of water based fillings preferred by many consumers without adversely impacting the taste of the product. Water activity can be lower by adding artificial ingredients such as glycerol. However fillings most desired by consumers are those such as creams or jams which are fruit based and/or comprise highly indulgent ingredients and thus have high water activity. It has been tried to coat baked foodstuffs such as wafers with edible moisture barriers to prevent transfer of water to the baked foodstuff. However this requires complex additional treatments that are expensive and/or use chocolate and/or other fatty materials that increase the calorie content of the product and/or have unacceptable sensory impact.

It is also desirable to keep wafers fresh for as long as possible to lengthen shelf-life and to maintain crispiness for longer when exposed to high humidity in a wide range of environments. This allows more flexibility during the delivery of the product, thus making supply-chain logistics easier to manage.

It is known that simple sugars can be added to a wafer batter in amounts of 5% or more by weight of the batter to improve textural properties of the resultant baked wafer. Such amounts of simple sugars have been found to produce a slight increase in moisture tolerance of the wafer, though this effect has been found to last only for a short period of a few weeks or months, depending on the water activity of the wafer. If wafers contain too high a concentration of simple sugars, the sugars will start to plasticise the wafers at high water activities or high temperatures.

However wafer batters that have concentrations of sugars (especially simple sugars) above 5% by weight of the batter have been found to be too sticky to be readily processed in an industrial baking process. Prior art wafer batters with low amounts of sugars (less than 5% by weight of wafer batter) are more easily processed but then do not provide sufficient retention of crispiness to the resultant wafer.

Thus it is believed that use of simple sugars alone (or even mono and disaccharide sugars alone) will not produce crispy, moisture resistant wafer that can be readily made on an industrial scale.

As used herein 'simple sugars' denotes the monosaccharides glucose (also known as dextrose), fructose and galactose; and the disaccharides sucrose (a combination of fructose and glucose units), maltose (two glucose units) and lactose (galactose and sucrose). Longer chains of sugars comprising three or more saccharide units are referred to herein as 'complex sugars' and depending on their molecular weight comprise oligosaccharide(s) (with three to five saccharide units) and/or polysaccharide(s) (with six or more saccharide units).

The applicant's patent application WO2009/149948 describes wafer products where certain maltodextrins described as monodisperse maltodextrins or fructooligosaccharides with a dextrose equivalent (DE) of from 9 to 20 are used to maintain wafer crispiness in waters with water activity of about 0.6 throughout the shelf life of the product. The term maltodextrin denotes an oligosaccharide and/or polysaccharide that consists of from three to seventeen D-glucose units connected via alpha (1 to 4) glycosidic bonds. Maltodextrin is not perceived as a natural ingredient in some countries (or a so called 'clean' label ingredient) and is also an expensive ingredient which is difficult to source in some countries Therefore there is a need to find a solution which uses less or no maltodextrin.

Wafers may also be produced by extrusion, as described in to the applicant's patent applications WO 2008/031796 and WO 2008/031798 related to a method for making large extruded wafers.

High density wafers with a low water content are described in the applicant's patent application WO2009/149947 which also discloses wafers comprising particles of solid maltodextrin together with a sweetener of disaccharide or a starch hydrolysate with DE greater than 40 or an inulin hydrolysate having a fructose equivalent of greater than 40, and selected from: sucrose, glucose, lactose, maltose, fructose, and crystalline hydrate formers like isomaltose, trehalose or raffinose or mixtures thereof. The application does not indicate that such wafers have improved moisture tolerance.

Enzymes may also be used in wafer manufacture as described generally in WO2009/149948 page 3 lines 6 to 16. Thus for example the applicant's patent application WO 2004/039162 (= EP1415539) discloses a flour based food product such as a wafer produced by using a thermostable alpha-amylase to manipulate textural properties of wafers. A moisture tolerant wafer is described in the applicant's patent application WO2008/129027 where a thermally stable alpha amylase enzyme was used to improve moisture resistance by catalysing the hydrolysis of the starch into smaller molecules and thus creating maltodextrin in situ. However, there are significant processing problems with the use of alpha-amylase, for example as described in WO2009/149948 page 4 lines 10 to 12.

Unlike the invention described in WO2008/129027, the present invention avoids the use of alpha-amylase to achieve the same or similar results without the complexity of the enzyme usage. In the present invention there is a lower risk of wafers sticking to the oven heated plates. The process of the present invention avoids the need to use enzymes and is therefore more stable as enzymes can be unpredictable should process conditions differ. By adding glucose (in the form or syrup or powder) a more consistent result in the finished product can be achieved.

Various other prior art documents and products are now described.

Unilever provided a baking mix product which (according Minitel record 263254) was available commercially in Germany from March 2004 under the trade mark Mondamin^{®}. These pancake mixes contains glucose syrup, though no benefit is mentioned for adding the glucose.

An article entitled 'Nutritive Sweeteners from Corn', 8th ed, 2006, pages 1 to 24 (XP 2751262) provides a general explanation of the processes to produce, characterise and use humectants. Page 8 of this document discloses that glucose products sourced from corn can be also be provided for *'non-sweetening functional requirements'* reflecting *'a diversity of physical properties'* including *'humectancy'.* The presence of humectants is undesired in the present invention as rather than keeping the wafers moist it is desired to keep the wafers dry and crispy. Page 26 of this document under the heading *'hygroscopicity'* states that corn syrups are employed as (inter alia) *'moisture conditioners, food plasticizers and*/*or crystallisation inhibitors'.* The present invention is desired to achieve the opposite, i.e. inhibit plasticity and/or maintain crystallisation. Hence the disclosures of this document teach directly away from the present invention.

US 4880653 (Keller Lewis1) discloses a process for making pretzels using extrusion and post baking that uses corn hydrolysates and corn syrups. Col 4, lines 3 to 11 states:
*'Generally, corn syrup is available with D.E. values ranging from about 65 to about 20, and corn syrup solids are available with D.E. values ranging from about 44 to 20. It is demonstrated herein below that the present invention may be practiced over the full range of D.E. values to make pretzel type products that upon forming, having low moisture and inherently stiff structure that permits various cross-sectional designs to be formed.'*

Pretzels (and processes for making them) are very different from the wafers and wafer making processes the subject of the present invention. As Keller Lewis1 acknowledges pretzels are *'especially characterised by the presence of a darkly browned exterior surface'* (col. 1 lines 28 to 30). A three dimensional knotted pretzel also has a very different internal structure from a flat wafer. A reader of Keller Lewis1 is taught that corn syrup is added to plasticize the in-feed pretzel dough mixture before extrusion (e.g. see col. 4, lines 29 to 52). Keller Lewis1 provides no indication to a skilled person that corn syrup may provide a beneficial texture and/or crispness to a wafer. US 4759939 (Keller Lewis2) is the parent application from which Keller Lewis1 derives, and describes a method for continuous production of Pretzel by extrusion cooking. In single example is made from a dry mix of ingredients containing 12.25 part by weight of *'Corn Syrup Solids (Maltrin M365, D.E. 36)'*. For similar reasons to that described above for Keller Lewis1, Keller Lewis2 is also not relevant to the present invention. A skilled person concerned with addressing the problems described herein would have no reason to refer to either Keller Lewis 1 or 2.

US 4803084 (Shine Ward) describes a method for preparing a shelf stable soft dough by supressing product water activity (Aw) to 0.75 or below. Hydrolysed starches- such as maltodextrin (MD), corn syrup or glucose syrup (GS) - are used to control Aw and reduce or delay microbial spoilage The starches are added in amounts from 20 to 50% by weight. There is no suggestion in this document that such ingredients could be used in wafers to improve crispness of a wafer product at higher Aw values.

HU 214189 (Interkolloid) describes a sugar free heat formed wafer product and there is no suggestion how the susceptibility of the product to moisture can be reduced.

GB 1240557 (CPC International) describes protein hydrolysates (such as starch hydrolysate) which have a D.E. from 5 to 25, and are used as an anti-caking additive to prevent agglomeration of dry mixtures in food. No specific type of food is referred to.

WO 2002-0239820 (Pillsbury) describes the use of starch hydrolysate to increase crispiness of sweet, dense wafers at high moisture content.. The no and low sugar wafers of the present invention have a light and airy texture designed for use in confectionery and are in direct contrast to the high sugar wafers of Pillsbury which have a dense texture designed for use as ice cream cones. The differences between Pillsbury wafers and those of the present invention are further explained later in this application.

Therefore it can be seen that improvements in baked foodstuffs such as wafers are still desired to better retain a fresh product texture, for example by using ingredients that are better perceived, more available and/or more affordable than those in prior art products which for example use maltodextrin.

Thus optionally in an embodiment of the invention it would be desirable to provide non-maltodextrin containing baked wafer products that have enhanced crispness retention; moisture tolerance and/or prolonged perception of a fresh texture towards the end of the product shelf life, preferably using ingredients which are 'clean-label' to give the similar or improved benefits than maltodextrin, conveniently with better availability and/or affordability.

Thus a desired foodstuff would be wafer resistant at least to fillings with a low water activity (i.e. with an A_{w} value up to 0.4). Another desired foodstuff would be a wafer that maintains texture freshness for longer in the presence of fillings with a medium water activity (i.e. with an A_{w} value from 0.4 to 0.5) and which is comparable or better than the performance of products containing maltodextrin. Further desired foodstuffs would be wafers having a fresher texture for longer in the presence of fillings with a high water activity (i.e. with an Aw value from 0.5 to 0.6) thus leading to improved healthier and/or indulgent products.

It is an object of the invention to overcome some or all of the problems described herein.

Therefore in accordance with the present invention there is provided a baked wafer where the product comprises
(i) flour;
(ii) a first, low molecular weight fraction of one or more saccharides with a number average molecular weight of less than 350 g/mol, present in an amount of no more than 10 parts by weight per 100 parts by weight of the flour;
(iii) a second, medium molecular weight fraction of one or more saccharides with a number average molecular weight of from 350 to 1600 g/mol;
where
(a) components (ii) and (iii) are derived and/or derivable from starch;
(b) components (ii) and (iii) together have a dextrose equivalence (DE) of at least 20; and
(c) components (ii) and (iii) together are present in a total amount of at least 8 parts by weight per 100 parts by weight of the flour; and where the product has:
   a no or low content of simple sugars of less than 10% by weight of the total product;
   wherein the simple sugars-are mondsacchariderglucose/dextrose, fructose and galactose; and the disaccharides sucrose, maltose and lactose, wherein components (ii) and/or (iii) comprises glucose syrups having a DE from 20 to 70; and wherein the product is a wafer having a density of from 0.1 to 0.3 g(cm)⁻³.

Usefully the baked foodstuff of the invention also has one or more of the following further characteristics:
a Young's modulus of less than 150 g / (mm)², and/or
resistance to a puncture pressure before breaking of at least 100 g / (mm)².

The wafer products of the invention have a density of from 0.1 to 0.3 g(cm)⁻³.

### Low sugar

Conveniently in one embodiment of the invention the product has a simple sugar content of less than 8%, more conveniently less than 5%, most conveniently less than 4% for example 0% (i.e. no simple sugar) by weight of the total product. It will be understood that a simple sugar content of less than a specified amount also includes those compositions which have no simple sugars, i.e. where the percentage by weight is zero where there are no simple sugars present, or where simple sugars are present in trace amounts below levels detectable with conventional techniques.

As used herein the term' no simple sugar' refers to the absence of simple sugars as defined herein in the compositions (e.g. wafers, products and/or batters etc.) of the invention. So in one (no sugar) alternative embodiment of the present invention the product and/or batter is substantially free (preferably free) of any simple sugars, whilst of course not precluding the presence of complex sugars such as the low, medium (and optionally high) molecular weight saccharide fractions as defined by components (i) and (ii) (and optionally (iv)) herein.

Total sugar denotes the total amount of both simple and complex sugars that are present in a composition (e.g. a batter or product) of the present invention. Preferably the batter and/or product of the invention has a total sugar content of less than 10%, even more preferably less than 8%, more preferably less than 5%, most preferably less than 4% by weight of the total batter or product.

The wafer product of the invention is low or no sugar wafer as defined herein, and in one embodiment comprises no more than 15% by weight of total wafer of any added sweetening agent including total sugars (e.g. sucrose, fructose, maltose, lactose etc.) and/or any other artificial substitutes therefor. Preferred wafers of the invention containing from no more than 10%, more preferably up to 8%, most preferably up to 5% by weight of added sweetener (including total sugars) based on the weight of the wafer. Preferred no sugar wafers are where zero extra sugar is added in additional to that present naturally.

In a preferred embodiment, products of the invention have a puncture resistance of at least 150 g(mm)⁻² and/or a Young's modulus of less than 100 g(mm)⁻² measured on a product of thickness 2.2 mm and at 10% moisture level. Either or both parameter may be determined using the test methods described in WO 2002-0239820 on page 11, lines 17 to 25 which section is hereby incorporated herein by reference.

Young's modulus (also known as the elastic modulus) is a measure of the stiffness of a material defined for a given material as the relationship between stress (force per unit area) and strain (proportional deformation), stiffer materials requiring more force to deform that softer materials. This assumes that (to a reasonable approximation) the elastic deformation is linear and that the material tested is isotropic. To test the stiffness of non-linearly elastic and/or anisotropic materials optionally analogous moduli (other than Young' Modulus) and suitable corresponding test methods may be used as will be well known to those skilled in the art.

More preferred products of the invention are wafers that have a stiffness (preferably as measured by Young's modulus using any conventional method) of less than 50 g / (mm)², even more preferably from 0.1 to 50 g / (mm)², most preferably from 0.2 to 20 g / (mm)^{2.}, for example from 0.5 to 10 g / (mm)². Typical wafer products of the invention have a Young's modulus of about 2 g / (mm)². The stiffness and /or Young's Modulus of the products of the present invention may be similar to those of conventional confectionery wafers and much lower than those values specified as the minimum for the ice cream cone wafers described in Pillsbury
In an alternative embodiment the products of the invention are wafers that have a resistance to a puncture pressure before breaking advantageously of less than 500 g / (mm)² and also usefully at least 200 g / (mm)², preferably at least 300 g / (mm)² , more preferably at least 350 g / (mm)²; and most preferably at least 400 g / (mm)². These puncture resistance values (which are not the same as Young's modulus which measures stiffness) may be obtained by an analysis of wafer texture with a puncture test using an Instron Universal Testing Machine (Model 1011) in the compression mode as described in WO 2002-0239820 or by any suitable test known to those skilled in the art). As can be seen from Table 1 in WO 2002-0239820 on page 11 from line 26 onwards, the puncture resistance values of the products of the present invention are similar to those of conventional confectionery wafers and are much lower than those values specified as the minimum for the ice cream cone wafers described in Pillsbury Components (ii) [the low molecular weight saccharide] and (iii) [the medium molecular weight saccharide] relate to the ingredients of a baked wafer. It is conventional in the baking industry to calculate the amounts of ingredients used to prepare in a batter or dough recipe before respectively baking or extruding with respect to the amount of flour present in the final product, i.e. as a weight ratio of an ingredient to the amount of flour rather than as an absolute amount or proportion (e.g. weight percent) of an ingredient in a recipe used to prepare the product (e.g. a batter prior to baking or a dough prior to extruding). This is because the final amount of water used in a recipe may vary and need to be adjusted depending on many factors, for example on the ambient conditions experienced when preparing the product.

The wafers described in WO 2002-0239820 (hereinafter Pillsbury) are very different from those of the present invention. For example Pillsbury's measure of crispness is different that used herein, so the terms crispiness as used by Pillsbury cannot be considered synonymous with term 'crispiness' in the sense it is used herein. Pillsbury measures wafer crispness using a modified version of Young's modulus. Page 8, lines 33 to 35 of Pillsbury state:
'*Crispiness is quantified by the modulus of the product, which is the force per unit area, typically measured in grams* / *square millimetre, needed to break, crack or puncture the product*.*'*

For convenience the term crispness has largely been superseded herein by the term 'work of crushing' to make clearer the difference between the crispness parameters described in Pillsbury and those used herein to characterise the present invention
Pillsbury wafers have high sugar content and lose crispiness in the presence of moisture by the mechanism of the transition of amorphous sugars from a hard brittle 'glassy' state to a rubber like state. The amorphous sugary domains undergo glass transition as the sugars absorb moisture. The sugar thus acts as a plasticiser resulting in a phase transition of domains within the Pillsbury wafer from hard glassy domains to soft rubbery domains and these wafers soften and become more flexible at high moisture content.

In contrast to the Pillsbury wafers, wafers of the present invention are light and crispy and are not sweet having low or no added simple sugars. Without wishing to be bound by any mechanism it is believed that wafers of the present invention lose their crispiness before glass transition occurs which is the point at which the sugary domains predominantly exhibit a rubbery state. It is believed that because wafers of the present invention contain mixtures of saccharide molecules of different molecular weights, these mixtures absorb water more readily in preference to starch. There is thus less of an opportunity for any starch that is present in the wafer to act as a plasticiser. It is believed that the loss of crispness in wafers of the invention (measured herein by the parameter, Wc, also known as work of crushing) occurs in three stages: as a phase transition from 'hard' to 'hard to touch' to 'soft to touch' domains. In the wafers of the invention it is believed that the presence of different molecule sizes allows the sugars to interact more closely together and the structural strength for a given amount of sugar thus increases (e.g. as measured by rigidity such as in a puncture test as described herein). Thus in one embodiment, wafers of the present invention may use less sugar than known wafers (such as the Pillsbury wafers) to achieve a given moisture resistance and/or structural strength. Alternatively in another embodiment and/or additional aspect, wafers of the present invention can have a less dense more open structure than known wafers (such as the Pillsbury wafers) and still provide the same amount of structural strength and/or moisture resistance as such known wafers. In a further alternative embodiment and/or additional aspect, wafers of the present invention can have greater structural strength and/or moisture resistance than known wafers (such as the Pillsbury wafers) optionally together with low density, open structure and/or low sugar content.

Usefully component (ii) comprises saccharide(s) moiet(ies) with a degree of polymerisation (DP) of from 1 to 6, more usefully consists of monosaccharide(s) and/or disaccharide(s). Each saccharide moiety has a molecular weight of less than 350 g/mol, most usefully consists of simple sugars.

Usefully component (iii) comprises saccharide(s) moeit(ies) with a degree of polymerisation (DP) of at least 2, more usefully consists of disaccharide(s), oligosaccharide(s) and/or polysaccharide(s) moieties, even more usefully each saccharide(s) moiety having a degree of polymerisation (DP) of from 2 to 20. Each saccharide moiety has a molecular weight of at least 350 g/mol.

Surprisingly the applicant has found that in one embodiment of the invention use of low molecular weight mono saccharide(s), disaccharide(s) (such as simple sugars) in combination with other disaccharide(s), oligosaccharide(s) and/or polysaccharide(s) (complex sugars) produces a moisture resistant product, the batter for which is also processable.

Broadly in accordance with another aspect of the present invention there is provided a batter suitable for preparing a wafer product or an expanded extruded cereal product of the invention where the batter comprises water, flour, a low molecular weight saccharide(s) component (ii) (e.g. simple sugars) and medium molecular weight saccharide(s) component (iii) (e.g. complex sugars) where the amounts and properties of the components thereof are as given herein for the wafer product or an expanded extruded cereal product of the invention herein. Preferred batters are those suitable for preparing wafers.

Optionally in one embodiment of the invention the product (e.g. wafer) is allowed to mature for a period so that the enzyme(s) (either naturally present in the flour and/or added to the batter separately) may transform the sugar composition of the product, so for example in another embodiment the amounts of sugar present in a matured batter or wafer is higher that the sugars added to the initial batter or wafer. The enzyme(s) may consume some sugars (e.g. sucrose) and/or transform them to other sugars or non-sugars. Thus the composition of the products of the invention described herein may also relate to fermented batter(s) and/or product(s) of the invention prepared after a maturation step and/or those sugars present initially in the batter and/or product in the amounts described herein depending whether enzymes are present. If maturation is required the optimum time periods for maturation are well known to those skilled in the art and/or can be readily determined for a particular recipe for example by measuring sugar content and/or molecular weight distribution until the desired value(s) are reached (and then stopping further fermentation) and/or waiting until fermentation has substantially ended.

Preferred products of the invention maintain their desired textural and/or sensory attributes as described herein) for at least 3 months, more preferably 6 months, most preferably 9 months.

Usefully products of the invention are also moisture resistant (i.e. maintain textural and/or sensory attributes within the desired values given herein) when the product has a low water activity (i.e. A_{w} < 0.4). More usefully products of the invention are moisture resistant when the product has a medium water activity (i.e. A_{w} from 0.4 to 0.5), most usefully are moisture resistant when the product has a high water activity (i.e. A_{w} from 0.5 to 0.6).

Desired textural attributes for preferred products of the invention may also be a work of crushing (denoted by W_{c}, measured as described herein) of < 6 N.mm, more preferably < 5 N.mm. Work of crushing relates to crispiness of the product.

A yet other aspect of the present invention there is provided a process comprising the step of baking a batter of the invention to obtain a baked wafer product.

A preferred process is for making wafers by baking a batter of the invention. A further optional step (especially where the batter and/or wafer comprises an enzyme capable of transforming sugars) is a maturation step in which the batter and/or wafers are held under suitable conditions for (optionally at a temperature higher than ambient), for example in a batter, to allow the sugar composition therein to develop to that described herein or in a wafer to change the moisture content.

Preferably in one embodiment of the invention the wafer products are substantially free of inulin hydrolysate. Without wishing to be bound by any mechanism the applicant believes that the presence of inulin hydrolysate, especially in amounts above about 5% by weight, especially more than about 15% by weight of the product may adversely effect the texture of the product (i.e. produce a higher W_{c} and thus lower work of crushing for a given water activity).

Inulin is a naturally occurring storage carbohydrate comprising a poly-disperse mixture of fructose polymers that consist of chain-terminating glucosyl moieties and a repetitive fructosyl moieties linked by beta (2,1) bonds, the mixture having a DP from 10 to 60 after manufacture, or refinement. Inulin hydrolysate is obtained by hydrolysing inulin and consists of a low molecular weight mixture of fructo-oligosaccharide oligomers having a DP of less than 10.

### Low MW saccharide component (ii)

Optionally low MW component (ii) consists of mono-saccharides and/or di-saccharides, preferably consists of simple sugars.

Preferably low MW component (ii) comprises no more than 5% of, more preferably is substantially free of, most preferably free of, inulin hydrolysate.

Conveniently low MW component (ii) is present relative to the total weight of flour being 100 parts, in an amount of at least 0.1, more conveniently at least 1, most conveniently at least 2, for example at least 3 parts by weight.

Usefully low MW component (ii) is present relative to the total weight of flour being 100 parts, in an amount of no more than 5, more conveniently no more than 4, most conveniently no more than 3.5 parts by weight.

Preferably low MW component (ii) is present relative to the total weight of flour being 100 parts, in an amount of from 0.1 to 10, more preferably 1 to 5, most preferably from 2 to 4 parts by weight.

Advantageously the low MW component (ii) is present in an amount of no more that 15%, preferably no more than 10%, more preferably more than 8%, most preferably no more than 5% by weight of the composition (e.g. the wafer, extruded cereal product or batter).

Usefully low MW component (ii) has an average dextrose equivalent (DE) of at least 25, more usefully at least 30, most usefully at least 35, for example at least 38.

Conveniently low MW component (ii) has an average DE of no more than 70, more conveniently no more than 60, most conveniently no more than 55, for example no more than 50

Preferably low MW component (ii) has an average DE from 20 to 70, more preferably from 25 to 60 and most preferably from 30 to 55, for example from 35 to 50.

As used herein the at least one mono saccharide(s) and/or at least one disaccharide(s) present in the low MW component (ii), are also denoted herein by the terms low molecular weight saccharide(s) and/or low MW saccharide(s). Preferred low MW saccharide(s) exclude inulin hydrolysate, fructooligosaccharides and maltodextrin.

Usefully the low MW saccharide(s) consists of at least one mono saccharide and/or at least one di-saccharide, more usefully consists of at least one mono saccharide and at least one disaccharide(s); most usefully consists of at least one saccharide(s) selected from the group consisting of (in the dry or the liquid form (e.g. as a syrup): glucose with a DE from 20 to 70, even more preferably from 25 to 65, more preferably from 25 to 50, most preferably from 29 to 45, for example a DE selected from at least one of: 29, 31, 40, 42 and/or 44.

Advantageously the low MW saccharide(s) are present in an amount, expressed as a weight percent of the total weight of the total amount of sugar (i.e. simple plus complex sugars) in the composition (e.g. product, wafer or batter) of at least 10%, more advantageously at least 15%, even more advantageously at least 20% and most advantageously at least 25% by weight of total sugars for example by total weight of components (ii) and (iii) (and optionally (iv)) if these are the only components present.

Usefully the low MW saccharide(s) are present in an amount, expressed as a weight percent of the total amount of sugar in the compositions of no more than 45%, more usefully no more than 40%, even more usefully no more than 35% and most advantageously no more than 30% by weight of total sugars for example by total weight of components (ii) and (iii) (and optionally (iv)) if these are the only components present.

Preferably the low MW saccharide(s) are present in an amount, expressed as a weight percent of the total weight of the total sugars in the compositions of from 10% to 50%, more preferably from 15% to 45%, even more preferably from 20% to 35%, most preferably from 25% to 30% by weight of the total sugars for example by total weight of components (ii) and (iii) (and optionally (iv)) if these are the only components present.

Preferably the low MW saccharide(s) consists of molecules having a molecular weight of from 150 to 350 g/mol, more conventionally of from 200 to 342 g/mol, even more conventionally of from 250 to 340 g/mol; and most conventionally of from 280 to 330 g/mol.

Conventionally the low MW saccharide(s) have a number average molecular weight (Mₙ) of from 150 to 350 g/mol, more conventionally of from 200 to 342 g/mol, even more conventionally of from 250 to 340 g/mol; and most conventionally of from 280 to 330 g/mol.

Typically the low MW saccharide(s) have a weight average molecular weight (M_{w}) of from 100 to 400 g/mol, more typically of from 150 to 380 g/mol, even more typically of from 200 to 370 g/mol; and most typically of from 250 to 350 g/mol.

### Medium MW saccharide(s) component (iii)

Optionally medium MW component (iii) consists of consists of complex sugars.

Preferably medium MW component (iii) is substantially free of, more preferably free of maltodextrin.

Preferably medium MW component (iii) comprises no more than 5% of, more preferably is substantially free of, most preferably free of inulin hydrolysate.

Conveniently medium MW component (iii) is present relative to the total weight of flour being 100 parts, in an amount of at least 5, more conveniently at least 8, even more conveniently at least 9, most conveniently at least 10, even most conveniently at least 12, for example15 parts by weight.

Usefully medium MW component (iii) is present relative to the total weight of flour being 100 parts, in an amount of no more than 25, more conveniently no more than 20, most conveniently no more than 18, for example no more than 17 parts by weight.

Preferably medium MW component (iii) is present relative to the total weight of flour being 100 parts, in an amount of from 5 to 25, more preferably 8 to 20, most preferably from 10 to 18, for example from 12 to 17 parts by weight.

Advantageously the medium MW component (ii) is present in an amount of no more that 15%, preferably no more than 10%, more preferably more than 8%, most preferably no more than 5% by weight of the composition (e.g. the wafer, extruded cereal product or batter).

Advantageously the medium MW saccharide(s) are present in an amount, expressed as a weight percent of the total weight of the total amount of sugar (i.e. simple plus complex sugars) in the composition (e.g. product, wafer or batter) of no more than 70%, more advantageously no more than 80%, even more advantageously no more than 85% and most advantageously no more than 90% by weight of total sugars for example by total weight of components (ii) and (iii) if these are the only components present.

Usefully the medium MW saccharide(s) are present in an amount, expressed as a weight percent of the total amount of sugar in the composition of at least 50%, more usefully at least 55%, even more usefully at least than 60% and most advantageously at least 65% by weight of total sugars for example by total weight of components (ii) and (iii) if these are the only components present.

Preferably the low MW saccharide(s) are present in an amount, expressed as a weight percent of the total weight of the total sugars in the composition of from 50% to 90%, more preferably from 55% to 85%, even more preferably from 65% to 80%, most preferably from 70% to 75% by weight of the total sugars for example by total weight of components (ii) and (iii) if these are the only components present.

Usefully medium MW component (iii) has an average dextrose equivalent (DE) of at least 25, more usefully at least 30, most usefully at least 35, for example at least 38.

Conveniently medium MW component (iii) has an average DE of no more than 70, more conveniently no more than 60, most conveniently no more than 55, for example no more than 50

Preferably medium MW component (iii) has an average DE from 20 to 70, more preferably from 25 to 60 and most preferably from 30 to 55, for example from 35 to 50.

The medium MW oligosaccharide(s) preferably consists of macromolecules having a molecular weight of from 500 to 1600 g/mol. Usefully the medium molecular weight fraction has a number average molecular weight (Mₙ) of from 500 to 1500 g/mol; and/or a weight average molecular weight (M_{w}) of from 400 to 1800 g/mol.

Medium MW component may comprise medium molecular weight oligosaccharide(s) and/or medium MW oligosaccharide(s). Preferred medium MW oligosaccharide(s) exclude inulin hydrolysate, fructooligosaccharides and maltodextrin.

The medium MW oligosaccharide(s) preferably consist of one or more oligosaccharides having from 3 to 9 monosaccharide repeat units.

### Components (ii) (iii) and optionally (iv) (low, medium and high MW in combination)

It will be appreciated that is some cases it is not possible to separate on the low molecular weight component (ii) from the medium molecular weight component (iii). These components may be added separately or together and may form an intimate mixture within the product, they may be combined in a single ingredient after being initially separate, and/or in one embodiment can be considered as single component or ingredient having an (optionally continuous) molecular weight distribution characterised by parts having the properties of and described for low MW component (ii) and parts characterised by the properties of and described for medium MW component (iii). Optionally the same considerations may apply for the high molecular weight component (iv) if present.

Conveniently components (ii) and (iii) are present relative to the total weight of flour being 100 parts, in a total amount of at least 10, more conveniently at least 12, most conveniently at least 13, for example at least 15 parts by weight.

Usefully components (ii) and (iii) are present relative to the total weight of flour being 100 parts, in a total amount of no more than 30, more conveniently no more than 25, most conveniently no more than 20, for example at least 18 parts by weight.

Components (ii) and (iii) are present relative to the total weight of flour being 100 parts, in a total amount of from 8 to 30, more preferably 10 to 25, most preferably from 12 to 20, for example from 15 to 18 parts by weight.

Usefully components (ii) and (iii) together in the amounts present in the product of the invention have an average dextrose equivalent (DE) of at least 20, more usefully of at least 25, more usefully at least 30, most usefully at least 35, for example at least 38.

Conveniently components (ii) and (iii) together in the amounts present in the product of the invention have an average DE of no more than 70, more conveniently no more than 60, most conveniently no more than 55, for example no more than 50

Components (ii) and (iii) together in the amounts present in the product of the invention have an average DE from 20 to 70, more preferably from 25 to 60 and most preferably from 30 to 55, for example from 35 to 50.

In one embodiment of the invention the composition (e.g. wafer or batter) of the invention comprises no other sugar(s) / saccharide(s) other than the low MW component (ii) and the medium MW component (iii). In this embodiment it will be appreciated that the amounts of components (ii) and (iii) calculated as a weight percent of components (ii) and (iii) together must total 100%, thus for example where a minimum weight percentage of 'n' %, is given herein previously for either component (ii) or (iii) the corresponding respective amount of component (iii) or (ii) is (100-n) %.

In another embodiment of the invention the composition (e.g. wafer or batter) of the invention comprises other sugar(s) / saccharide(s) in addition to those part of the low MW component (ii) and the medium MW component (iii), for example may comprises other sugars and/or other (higher) molecular weight component(s) such as component (iv).

### High molecular weight fractions (high MW fraction above 1600 g/mol))

The products, or batters of the invention may comprise as optional component (iv) a third (high) molecular weight fraction of saccharide(s) in additional to the first and second fractions, i.e. comprise saccharide(s) moieties having molecular weights above 1600 g/mol. This saccharide(s) fraction is also referred to as the high molecular weight fraction and comprises at least one polysaccharide(s).

As used herein the at least one polysaccharide(s) present in the high molecular weight fraction as defined are also denoted herein by the terms high molecular weight polysaccharide(s) and/or high MW polysaccharide(s).

The high MW molecular weight fraction component (iv) preferably consists of one or more polysaccharides having more than 9, monosaccharide repeat units.

The high MW polysaccharide(s) consist of macromolecules having a molecular weight of more than 1600 g/mol. Usefully the high molecular weight fraction has a number average molecular weight (Mn) of from 1600 g/mol to 20000 g/mol. and/or a weight average molecular weight (Mw) of from 1600 to 30000 g/mol.

The high molecular weight fraction described above may optionally comprise no more than 40%, preferably not more than 30%, more preferably not more than 20% and most preferably not more than 10% of the total weight of sugars, for example of the total weight of components (ii), (iii) and (iv). It will be appreciated that if there are no other sugar components present that if calculated by weight of total sugar the weight percents of low (ii), medium (iii) and high (iv) molecular weight fractions will total 100%.

### Other aspects of the invention

In a further aspect of the invention there is provided a wafer batter for a no- or low-sugar wafer comprising low molecular weight saccharide(s) component (ii) and medium molecular weight saccharide(s) component (iii) as described herein.

According to a further aspect the invention provides a method for making a baked wafer. Further the invention provides a food product comprising a baked wafer product as described herein.

There could be provided (not part of the present invention) a moisture resistant no or low sugar, low density wafer having a water activity (A_{w}) from 0.4 to 0.6; a work of crushing (W_{c}) < 6 N.mm, the wafer being substantially free of inulin hydrolysate and maltodextrin, where the wafer comprises flour and a component consisting of monosaccharide(s), oligosaccharide(s) and/or polysaccharide(s) that are derived and/or derivable from starch where the starch derivable components:
(a) are present in the wafer in an amount of at least 8 parts to 20 parts by weight to 100 parts by total weight of flour;
(b) has a DE of from 20 to 70, and
(c) has a molecular weight distribution characterised by
   (1) a first molecular weight fraction of oligosaccharide(s) having a molecular weight of less than 1000 g/mol, where the first molecular weight fraction is present in an amount of at least 25 parts by weight to 100 parts by weight of the total presence of sugars (simple and complex);
   (2) a second molecular weight fraction of oligosaccharide(s) having a molecular weight of from 1000 to 1500 g/mol, where the second molecular weight fraction is present in an amount of at least 10 parts by weight to 100 parts by weight of the total presence of sugars (simple and complex);
(d) where the total amount of (c)(I) and (c)(2) is present from 10 to 50 parts by weight to 100 parts by weight of the total sugars (simple and complex);
where the wafer:
is a no or low sugar wafer with simple sugars present in an amount less than 5% by weight of the wafer; and
has a low density of less than or equal to 1 g(cm)⁻³.

### MECHANISM

Without being bound by any particular theory it is believed that the improved moisture tolerance of foodstuffs of the invention is due at least in part to medium molecular weight oligosaccharides occupying in whole or in part the interstitial spaces between starch molecules in the baked foodstuff which results in one or more of the following effects on the resultant starch matrix: an increase in the density of the matrix; a reduction in the hygrocapacity of the matrix by blocking moisture binding sites; competition for moisture binding within the matrix; reduced local motion of the starch chains within the matrix; and/or a change in the glass transition temperature of the matrix. Thus it is believed that the presence of ingredients having a broad molecular weight distribution increase the tolerance of the product texture to water as the high molecular weight compounds provide high viscosity and high T_{g} values and the low molecular weight compounds increase the matrix density by filling up voids between the high molecular weight molecules. Ingredients that increase the T_{g} at a given water activity might increase moisture tolerance. Hygrocapacity is a quantative measure of the ability of a substance to bind water by adsorption into the molecule matrix and adsorption onto the free surface area. Ingredients with an increased hygrocapacity may produce a wafer that stays crispy for a longer time at a given water activity and hence reduce the susceptibility of wafer crispness to water. Ingredients that increase the strength of the wafer matrix (independent from their influence on T_{g}) may increase the tolerance of water crispness to water.

### WAFER

The wafer product of the invention is a wafer a low or no sugar wafer as defined herein, and in one embodiment comprises no more than 15% by weight of total wafer of added sweetening agent including sugars or other artificial substitutes therefor.

Although as described herein products of the invention may have up to 35 parts of saccharides (low and medium MW) per 100 parts of flour, once the other ingredients are taken into account (such as water) and taking into account the amount of sugars already present naturally, then calculated based on weight of the total product, it is likely most the wafer products of the invention would be considered low sugar based on the sugar added.

Dextrose equivalent (DE) is a measure of the amount of reducing sugars) present in a starch hydrolysate product, relative to dextrose, expressed as a percentage on a dry basis. For solutions made from starch, it is an estimate of the percentage reducing sugars present in the total starch product. DE can be determined experimentally e.g. by conventional methods such as titration and the DE is calculated as (reducing sugar content (glucose) / total solids content × 100%). DE can be used to give an approximate indication of the degree of polymerisation (DP) which is the number of repeat units present in a macromolecule as typically for starch sugars DE = 100 / DP.

The wafer of the invention may be a flat wafer either having geometric shapes or cartoons character shapes, as well as alphabet letters or numbers, for example. It can also be a three dimensional shaped wafer such as, for example, a cone, a glass, a dish. Wafer texture results from the generation of gas cells in a gel structure mainly composed of gelatinised starch. The high temperature of the baking plates induces a rapid gelatinisation of starch granules present in the flour and production and expansion of the gas bubbles inside the gelatinous matrix. These gas cells are, in the common practice, mainly generated from gassing agents such as added bicarbonates or carbon dioxide produced by gas-generating microorganisms such as yeast during batter fermentation and from steam produced by heating. Therefore the wafer can be seen as a solid foam of gelatinised and dried starch/flour with dispersed gas cells (which can form an almost continuous phase in certain cases).

A wafer batter usually comprises around 30 - 60% flour, for example wheat flour. In some batters, starch may be added in addition to the flour. The batter may also comprise at least one of the following ingredients: fat and/or oil, lecithin and/or emulsifiers, sugar, whole egg, salt, sodium bicarbonate, ammonium bicarbonate, skim milk powder, soy flour and/or enzymes such as xylanases or proteases, for example. Any standard wafer batter may be used in accordance with the invention by adding glucose syrup liquid or dried in powder form. Optionally if the batter and/or wafer comprises an enzyme capable of transforming sugars, the batter or wafer is allowed to mature to develop the sugars therein to corresponding to those and in the amounts described herein.

A wafer of the present invention may be prepared by any method known to the skilled person. For example as described in WO2009/149948
A batter of the invention may comprise the same amounts of component (i) as specified herein for a wafer or the invention (and vice versa).

In one alternative a batter of the invention may comprises from 3 to 10 parts, preferably from 4 to 9 parts and most preferably from 5 to 8 parts of low MW component (ii), where one part is defined as a ratio of 1 kg per 100 kg of flour. Further alternatively a batter of the invention may comprise from 5 to 20 parts, preferably from 6 to 15 parts and most preferably from 7 to 12 parts of medium MW component (iii) where one part is defined as a ratio of 1 kg per 100 kg of flour. Still further alternatively a batter of the invention may comprise component (ii) and (iii) together in a total amount of 8 to 30 parts, preferably from 10 to 24 parts and most preferably from 12 to 20 parts where one part is defined as a ratio of 1 kg per 100 kg of flour.

The use of these components does not bring any extra complexity to the production process as such ingredients are available in liquid or powder forms and may be added to the batter simultaneously with or separately to other batter ingredients.

With wishing to be bound by any theory it is believed advantageous to have molecules spread over a narrow range of molecular weights because it helps to dilute the effect of certain molecular weight fractions and to preserve the texture of the wafer. In addition, it is believed advantageous to ensure a low proportion of mono- and di-saccharides because these molecules are responsible for the sticking of the wafer on the plates during baking, if used at too high a concentration.

To have good processability, a low or no-sugar wafer recipe should not cause the wafer to stick to the wafer baking plate after baking, the wafer should not be so friable as to make it difficult to transport and layer with filling creams without it breaking and the wafer batter should be stable for at least 30 minutes, preferably 1 hour after manufacture to allow storage of the batter before wafer baking.

Unless otherwise indicated herein the terms of art used herein have the meanings ascribed to them in WO2009/149948 or where not defined in this reference have the meanings ascribed to them that would be well known to those skilled in the art of wafer baking on an industrial scale.

### PRODUCTS

The product of the invention may be a wafer, for example a single sheet of wafer which is uncoated or laminated a so called 'naked wafer. Such a wafer sheet may be incorporated into a further product, e.g. laminated with one or more other wafer sheets having filings thereon and/or there between and/or coated, enrobed and/or moulded with other coatings and/or fat based confectionery (such as chocolate or analogous thereof). Thus the term 'product' as used herein does not necessarily refer just to those products in the form they commercially available to the public, but also includes products that are intermediate components used in the production of a more complex product such intermediates not necessarily being sold separately, provide such intermediates are clearly distinct entities.

Thus the wafer product of the invention can be presented to the consumer as a wafer product by itself, but it can also be further processed to form a confectionery or savoury food product or a pet food. Therefore, the present invention also comprises a food product comprising a moisture-resistant wafer as described above in contact with another food material. The other food material may be a confectionery or savoury food product or a pet food. Preferably the wafer product is in direct contact with the food material.

Conventional food materials may be used and examples of suitable food materials are chocolate, jelly, compound chocolate, ice-cream, sorbet, nut paste, cream-based products, cake, mousse, nougat, caramel, praline, jam, wafer rework or a combination of these ingredients with or without inclusions of the same ingredient in a different state or of a different ingredient. For savoury products suitable food materials would include fish or meat paste, cheese-based materials or vegetable puree. Such a food product may include one or more of these other materials as fillings for the wafer product.

It is possible to make a sandwich bar composed of external layers of wafers framing the same or different fillings. The sandwich can also be a succession of a wafer and filling pair, the first and last layers being wafer, comprising from 2 to 15 wafer layers. Although the use of a moisture barrier is generally unnecessary, a moisture barrier may optionally be used if desired.

It is also possible to use the wafer product as the centre or part of the centre of a confectionery or savoury product or a pet food. The wafer product may be enrobed or moulded in the coating material which can be any of the usual coatings, for example a chocolate, compound, icing, caramel or combinations of these. Preferably the food product is a confectionery product.

Since the wafers of the present invention maintain desired textural qualities such as crispness or brittleness at high water activities, the invention allows the production of novel confectionery products with healthier fillings such as low-fat or low-calorie fillings, or new fillings such as caramel, fruit jam or a real fruit filling, where the wafer product is in direct contact with the filling without the need of a moisture barrier.

### DEFINTIONS

The term 'comprises' 'comprising' and related words as used herein are not to be interpreted in an exclusive or exhaustive sense but will be understood to mean that the list following is non exhaustive and may or may not include any other additional suitable items, for example one or more further feature(s), component(s), ingredient(s) and/or substituent(s) as appropriate, in other words, these terms are intended to mean 'including', but not limited to.

The terms 'effective', 'acceptable' 'active' and/or 'suitable' (for example with reference to any process, use, method, application, preparation, product, material, formulation, compound, monomer, oligomer, polymer precursor, and/or polymers described herein as appropriate) will be understood to refer to those features of the invention which if used in the correct manner provide the required properties to that which they are added and/or incorporated to be of utility as described herein. Such utility may be direct for example where a material has the required properties for the aforementioned uses and/or indirect for example where a material has use as an intermediate in preparing other materials of direct utility. As used herein these terms also denote that a functional group is compatible with producing effective, acceptable, active and/or suitable end products.

Preferred utility of the present invention comprises a wafer having one or more of the desired properties described herein.

Unless defined otherwise, all technical and scientific terms have and should be given the same meaning as commonly understood by one of ordinary skill in the art to which this invention belongs.

The term 'substantially' as used herein may refer to a quantity or entity to imply a large amount or proportion thereof. Where it is relevant in the context in which it is used 'substantially' can be understood to mean quantitatively (in relation to whatever quantity or entity to which it refers in the context of the description) there comprises an proportion of at least 80%, preferably at least 85%, more preferably at least 90%, most preferably at least 95%, especially at least 98%, for example about 100% of the relevant whole. By analogy the term "substantially-free" may similarly denote that quantity or entity to which it refers comprises no more than 20%, preferably no more than 15%, more preferably no more than 10%, most preferably no more than 5%, especially no more than 2%, for example about 0% of the relevant whole. Preferably where appropriate (for example in amounts of ingredient) such percentages are by weight.

In the discussion of the invention herein, unless stated to the contrary, the disclosure of alternative values for the upper and lower limit of the permitted range of a parameter coupled with an indicated that one of said values is more preferred than the other, is to be construed as an implied statement that each intermediate value of said parameter, lying between the more preferred and less preferred of said alternatives is itself preferred to said less preferred value and also to each less preferred value and said intermediate value.

For all upper and/or lower boundaries of any parameters given herein, the boundary value is included in the value for each parameter. It will also be understood that all combinations of preferred and/or intermediate minimum and maximum boundary values of the parameters described herein in various embodiments of the invention may also be used to define alternative ranges for each parameter for various other embodiments and/or preferences of the invention whether or not the combination of such values has been specifically disclosed herein.

It will be understood that the total sum of any quantities expressed herein as percentages cannot (allowing for rounding errors) exceed 100%. For example the sum of all components of which the composition of the invention (or part(s) thereof) comprises may, when expressed as a weight (or other) percentage of the composition (or the same part(s) thereof), total 100% allowing for rounding errors. However where a list of components is non exhaustive the sum of the percentage for each of such components may be less than 100% to allow a certain percentage for additional amount(s) of any additional component(s) that may not be explicitly described herein. All percentages for amounts are given in percent by weight, if not otherwise indicated and applicable.

Compositions of and/or used in the present invention may also exhibit improved properties with respect to known compositions that are used in a similar manner. Such improved properties may be (preferably as defined below) in at least one, preferably a plurality, more preferably three of more of those propert(ies) labeled 1 to 5 below. Preferred compositions of and/or used in the present invention, may exhibit comparable properties (compared to known compositions and/or components thereof) in at least one, more preferably at least two, even more preferably at least three, most preferably at least four, for example all of those properties labeled 1 to 5 below.
1) Crispness retention
2) Moisture resistance
3) Cardboardiness
4) Work of crushing (W_{c}) for a given water activity (A_{w})

Improved properties as used herein means the value of the property of the component and/or the composition of and/or used in the present invention, where it can be measured quantatively, is > +8% of the value of the known reference component and/or composition described herein, more preferably > +10%, even more preferably > +12%, most preferably > +15%.

Comparable properties as used herein means the value of the property of the component and/or composition of and/or used in the present invention, where it can be measured quantatively, is within +/-6% of the value of the known reference component and/or composition described herein, more preferably +/- 5%, most preferably +/- 4%.

The percentage differences for improved and comparable properties herein refer to fractional differences between the component and/or composition of and/or used in the invention and the known reference component and/or composition described herein where the property is measured in the same units in the same way (i.e. if the value to be compared is also measured as a percentage it does not denote an absolute difference).

The reference composition used to measure improvement or comparability is preferably a composition analogous to those of the present invention that comprise the additional ingredients described herein, where the the additional ingredients are replaced by the same total amount by weight of other conventional ingredients all other ingredients remaining unchanged.

### TEST METHODS

### Cardboard mouth feel or texture ('Cardboardiness')

As described herein a cardboard like mouth feel for a product (e.g. wafer) is an indication that the texture is unacceptable (for example the moisture level may be unacceptably high) and conversely lack of such a cardboard texture indicates that the moisture level is within acceptable limits. This was assessed herein by a trained sensory panel and is also referred to as 'cardboardiness'.

Desired sensory attributes for preferred products of the invention are a carboardiness rating of 6 or below, more preferably 5 or below as these values were deemed the minimum to provide an acceptable taste. These rates were assessed by a sensory trained panel on a dimensionless scale of 0 to 10 (where zero is an absence of any cardboard like taste and 10 is a completely cardboard like taste).

As can be seen from the figures herein there is an excellent correlation between analytically determined W_{c} values in N.mm and carboardiness rating (on a 0 to 10 scale) determined by a sensory trained panel. Thus either method can be used to describe the same texture attribute of the product.

### Work of crushing (W_{c})

Work of crushing (W_{c}) measured in units of Newton millimetres is defined as: ${W}_{c} = \frac{A}{No}$ where
No = total number of peaks,
A = Area under the force-deformation curve (N.mm)

W_{c} is the energy required to penetrate the product (e.g. wafer) and represents the strength to break down the product when chewing. The higher the value of W_{c} the more soggy is the product (or conversely the lower the crispiness) and more pronounced is the (undesirable) cardboard texture (also referred to as 'cardboardiness'). The slope and the value of W_{c} will vary depending on the density of the wafer and thus W_{c} will also depend on the water to flour ratio in the batter recipe. W_{c} is further explained in WO2009/149948 on page 12 line 15 to page 14, line 13 (incorporated herein by reference). W_{c} is aslo referred to as crispness but to avoid confusion is referred to herein as work of crushing.

The method used to determine W_{c} and analyse the texture of wafers is as follows. Six disks are cut out of the wafer using the circular cutting tool (radius 2cm) and eight stacks of six disks are made. A 4 mm probe is used to pass through 8mm of sample disk stack. A texture analyser able to record force/distance parameters during penetration of a probe into the wafer stack was used as described. The instrument forces a cylindrical probe into a stack of wafers and the structural ruptures (force drops) are recorded. The frequency of force drops allows discrimination between wafer textures whereby the higher the number of force drops, the higher the crispiness. The conditions used for this test were: Texture Analyser TA.HD, Stable Micro Systems, England; load cell 50 kg; 4mm diameter cylinder stainless probe; penetration rate 1mm/s; distance 8mm; record of force drops greater than 0.2N; trigger force greater than 0.5N; acquisition rate 500 points per second. The test is repeated until a total of 8 repetitions are obtained. The average and standard deviation of the results (W_{c}) are recorded. Analogous similar methods can be used for non-wafer products (e.g. extruded products).

### Water Activity (A_{w})

Water activity is temperature dependent and represents the amount of free water in a substance, i.e. water not bound. Water activity is thus the partial vapour pressure of water in a substance divided by the standard state partial vapour pressure of pure water. Numerically A_{w} is a non-dimensional number between 0 and 1 (the A_{w} for pure water being 1). For the tests performed herein unless otherwise indicated water activity is tested under Standard Conditions.

The water activity of a foodstuff product such as a wafer exposed to an environment is determined after equilibration period. Water migrates from areas of high A_{w} to areas of low A_{w}. Typically, even when seemingly dry, a naked wafer may still comprise some free water and thus has a water activity above zero, typically about 0.1. When a dry wafer exposed to a higher water concentrations (e.g. from a filing with high water activity) it will absorb free water. Similarly a filing with a high water activity in contact with a wafer will lose moisture to the drier wafer. Thus the water activity of filling reduces and the water activity of the wafer increases until they are in balance and then A_{w} of the equilibrated product can be determined. The period needed for equilibration may vary according to the material being tested but is well known to those skilled in the art and for example can be determined by measuring Aw under the same conditions until there is no change (i.e. balance has been achieved).

Foodstuffs of the invention may have low, medium or high water activity. For a foodstuff of the invention (such as a wafer or expanded extruded cereal product) with a filling, after equilibration between the filling and the product, it has been found that product of the invention may achieve acceptable or satisfactory sensory perception over a range of water activities, preferably A_{w} ≤ 0.4, more preferably ≤ 0.5, even more preferably ≤ 0.55, most preferably ≤ 0.6, for example ≤ 0.65.

Thus preferred wafer or an expanded extruded cereal product of the invention, at water activities from 0.3 to 0.65, an increase of 0.1 in water activity results in a W_{c} increase of less than 2.0, more preferably results in an increase less than 1.5, even more preferably results in an increase less than 1.25, and most preferably results in an increase less than 1.0 N.mm.

### Moisture Resistance

As used herein the terms "moisture resistant" and "moisture tolerant" mean the same thing and will be used interchangeably. Accordingly, a moisture resistant product (e.g. wafer) denotes a product that maintains satisfactory crispness and/or satisfactory sensory perception even in environments with large amounts of free water (i.e. where the product has a water activity typically higher than those commonly experienced in for example wafer confectionery).

Thus moisture resistant products of the invention maintain an acceptable mechanical resistance (e.g. less than 6 as measured by W_{c}) and sensory attributes (e.g. less than 6 as measured by cardboardiness) for a longer period (e.g. at least 3 months) than prior art products and/or at higher water activities. Thus moisture resistant products of the invention maintain satisfactory W_{c} and low cardboardiness at low water activities, i.e. up to 0.4 (e.g. from 0.3 up to 0.4), preferably for longer than prior art compositions. More preferred moisture resistant products of the invention, surprisingly maintain satisfactory Wc and low cardboardiness at medium water activities from 0.4 up to 0.5. Even more surprisingly, the most preferred moisture resistant products of the invention maintain satisfactory Wc and low cardboardiness at higher water activities from 0.5 upward (for example high water activities from 0.5 to 0.6).

Without wishing to be bound by any theory it is believed that in general when testing for moisture resistance in the products of the invention, in one embodiment of the invention an increase of 0.1 in water activity may conveniently result in a corresponding W_{c} increase of less than 2 N.mm (corresponding to only a small decrease in the work of crushing or crispness). When testing moisture resistance of wafers having water activities from 0.3 to 0.6, in another embodiment of the invention an increase of 0.1 in the water activity of the wafer, may usefully produce a corresponding W_{c} increase of less than 1.5, more preferably less than 1.25, and more preferably less than 1.0 N.mm. Testing wafers having even higher water activities (i.e. above 0.6), generally shows an even greater moisture tolerance compared to prior art wafer compositions. Accordingly, when testing for moisture resistance of wafers with initial water activities from 0.3 to 0.65, in a yet other embodiment of the invention, an increase of 0.1 in the water activity of the wafer may advantageously produce a corresponding W_{c} increase for the wafers of the invention of less than 2-fold, preferably less than 1.5-fold and more preferably less than 1.25-fold, (which is still only a small decrease in work of crushing).

The term 'moisture resistant' as used herein denotes that at least one (preferably both) of the mechanical resistance (as measured by W_{c}) and/or initial sensory attributes (cardboardiness as determined by the sensory panel) of the product to be tested are substantially maintained (preferably within 10% of the initial value of the product) after the product has been equilibrated with the test environment or desired compositions (for example with fillings with low, medium or high A_{w}). In this test the comparison is with the initial value of the (seemingly) dry product without fillings (e.g. naked wafer) which is tested for W_{c} and cardboardiness after being equilibrated in air under Standard Conditions. The test period is usually specified in the results and is typically 0 (i.e. initial value), 3, 6 or 9 months. If no period is specified the test, the period is after initial testing (0 months). Reference samples can usefully be kept sealed in an air tight packaging (sealed foil pouches) at 16°C between tests other samples to be tested are kept in conventional (non-airtight) packaging. Samples that pass this test are also denoted as having 'satisfactory' moisture resistance, mechanical resistance and/or sensory attributes.

Optionally the product of the invention has a water activity of from 0.55 to 0.65.

Products of the invention are moisture resistant as defined herein at water activities (A_{w}) of up to at least 0.4.

Preferred products of the invention are moisture resistant as defined herein at water activities (A_{w}) of up to 0.5, more preferably up to 0.6 and most preferably up to 0.65.

Useful products of the invention are moisture resistant as defined herein at water activities (A_{w}) of at least 0.05, more usefully at least 0.1, even more usefully at least 0.2 and most usefully at least 0.3, for example at least 0.4.

Conveniently products of the invention are moisture resistant as defined herein at water activities (A_{w}) of from 0.2 to 0.4, more conveniently from 0.2 to 0.5, even more conveniently from 0.1 to 0.5 and most conveniently from 0.05 to 0.65.

One embodiment of invention comprises products that are moisture resistant as defined herein at water activities (A_{w}) of up to 0.4 (also denoted herein as Low A_{w}), optionally for at least 3 months, usefully for at least 6 months, more usefully for at least 9 months, such products also being referred to herein as being Moisture Resistant.

A preferred further embodiment of invention comprises products that are moisture resistant as defined herein at water activities (A_{w}) of from 0.4 up to 0.5 (also denoted herein as Medium A_{w}), optionally for at least 3 months, usefully for at least 6 months, more usefully for at least 9 months, such products also being referred to herein as having Medium Moisture Resistance.

A more preferred yet other embodiment of invention comprises products that are moisture resistant as defined herein at water activities (A_{w}) of from 0.5 to 0.6 (also denoted herein as High A_{w}), optionally for at least 3 months, usefully for at least 6 months, more usefully for at least 9 months, such products also being referred to herein as having High Moisture Resistance.

Advantageously in another aspect of the present invention the test for moisture resistance described above can be used as a tool to select, predict and/or tailor recipes for products of the invention (comprising the ingredients described herein) to have a particularly desired level of moisture resistance (e.g. Moisture Resistance, Medium Moisture Resistance or High Moisture Resistance) optionally for a specified period (e.g. 3, 6 or 9 months). Thus for example if High Moisture Resistance is not needed for a certain wafer product this may permit more flexibility in the choice of the amounts of water and/or flour than can be used in the recipe (which impacts W_{c}) of the batter from which a wafer is made whilst still having the minimum needed level of moisture resistance that is desired.

### Standard Conditions

As used herein, unless the context indicates otherwise, standard conditions means, atmospheric pressure, ambient temperature (22°C ±2°) and optionally a relative humidity (RH) of 50% ±5%. Unless otherwise indicated all the tests herein are carried out under standard conditions as defined herein. However when testing for water activity the samples are allowed to reach equilibrium, so that the actual a_{w} of the samples will correspond to the RH of the test environment (i.e. a sample with a_{w} of 0.5 will be tested at RH of 50%) and so the RH of these tests will vary.

It should be noted that embodiments and features described in the context of one of the aspects or embodiments of the present invention also apply to the other aspects of the invention. Although embodiments have been disclosed in the description with reference to specific examples, it will be recognized that the invention is not limited to those embodiments. Various modifications may become apparent to those of ordinary skill in the art and may be acquired from practice of the invention and such variations are contemplated within the broad scope of the present invention. It will be understood that the materials used and the chemical details may be slightly different or modified from the descriptions without departing from the methods and compositions disclosed and taught by the present invention.

It is appreciated that certain features of the invention, which are for clarity described in the context of separate embodiments may also be provided in combination in a single embodiment. Conversely various features of the invention, which are for brevity, described in the context of a single embodiment, may also be provided separately or in any suitable sub combination.

Further aspects of the invention and preferred features thereof are given in the claims herein.

Any reference to prior art documents in this specification is not to be considered an admission that such prior art is widely known or forms part of the common general knowledge in the field.

The present invention will now be described in detail with reference to the following figures and non limiting examples which are by way of illustration only.

### FIGURES

The invention is illustrated by the following non-limiting Figures herein, where:
Figure 1 is a plot of work of crushing iness on the ordinate (as measured by W_{c} as described herein) versus water activity on the abscissa (A_{w} measured as described herein) of various different wafer made from different recipes as described herein (the legend is given in Table 5 in the Examples).

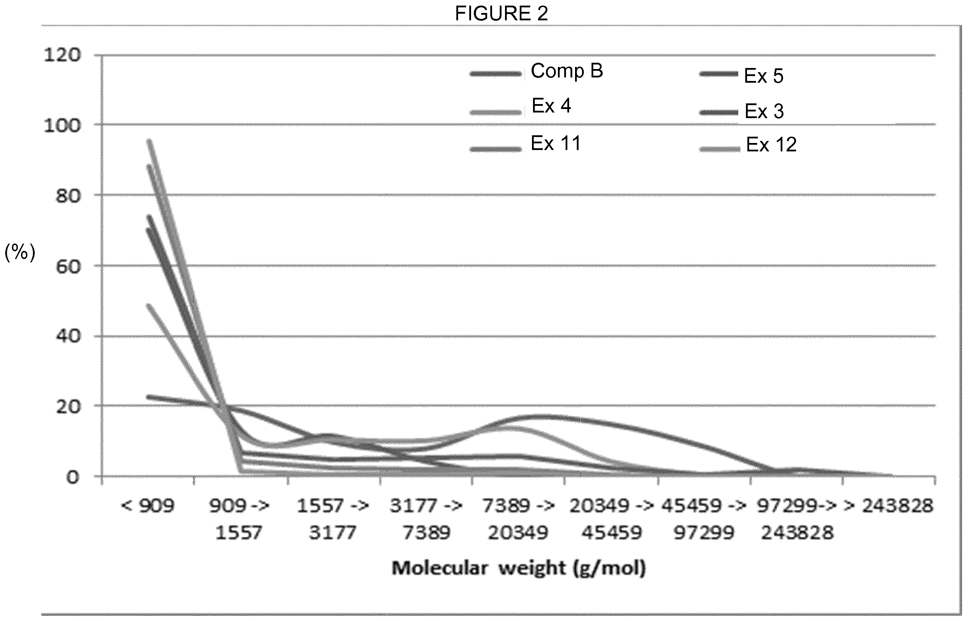

Figure 2 is a plot of molecular weight distribution of maltodextrins and glucose syrups used to prepare various examples of the present invention.

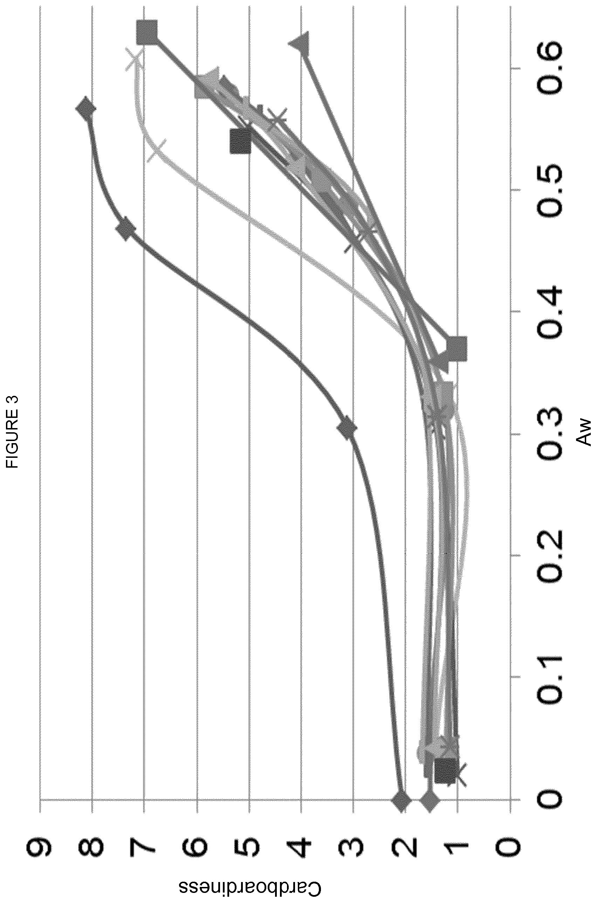

Figure 3 is a plot of the perceived cardboard like texture (from a sensory panel as described herein ) on the ordinate versus water activity on the abscissa (A_{w} measured as described herein) of various different wafer made from different recipes as described herein. (The legend is the same as for Figure 1 and as given in Table 5 in the Examples).

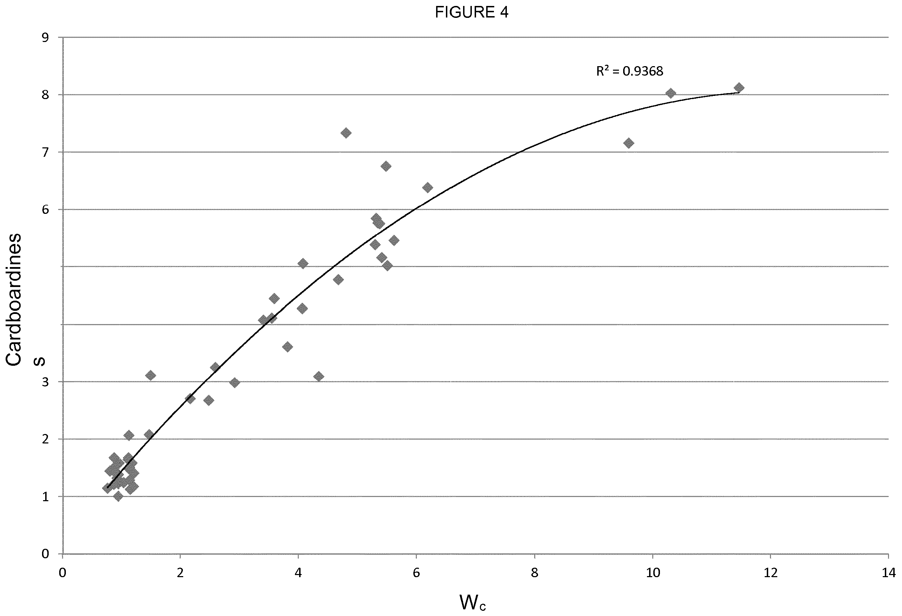

Figure 4 is a plot of cardboardiness (ordinate) rated 0 to 10 by sensory panel versus work of crushing (Wc) (abscissa) measured N.mm that shows there is a strong correlation between these two parameters.

### Examples

The following basic reference recipe (Comp A) can be used to prepare wafer examples of the invention and comparative examples.

**Table 1**

| Reference recipe for wafer batter - Comp A | |
|---|---|
| Ingredient | Parts by weight |
| Flour | 100 parts |
| Water | 101 parts |
| Lecithin | 0.16 parts |
| refined deodorised palm kernel oil (RDPKO) | 1.5 parts |
| Calcium sulphate | 0.25 parts |
| Salt | 0.25 parts |
| Enzyme | 0.05 parts |

The flour is a soft flour as is known to those skilled in the art as suitable for forming a wafer.

The following basic reference recipe (Comp B) for an expanded extruded cereal product can be used similarly to prepare examples and comparative examples that are extruded cereal products (not part of the present invention).

**Table 2**

| Reference recipe for extruded cereal product Comp B | |
|---|---|
| Ingredient | Parts by weight |
| Flour | 100 parts |
| Milk powder | 2 parts |
| Salt | 1.5 parts |
| Oil and fat | 0.5 parts |
| Water | 3 parts |

To the basic reference examples Comp A or B above is added 'n' parts of various sugar ingredients in the amount referred to herein, where 'n' is denotes parts by weight of ingredient with respect to 100 parts flour). Various sugar ingredient are used to prepare as examples wafers of the invention and comparative wafers. These sugar ingredients are labelled '*I x',* if when added to the Comp A or B the example recipe forms a wafer or cereal product of the invention, or 'C x' if the recipe still forms a comparative example.

### Sugar Ingredients

The following ingredients may be used herein to prepare comparative examples.

C1 (Maltodextrin) denotes a mixture of maltodextrins in a respective weight ratio of 85 parts maltodextrin with a DE of 6 with 15 parts maltodextrin with a DE of 46.

C2 (also referred to herein by the reference 'MDs 12-16 DE powder') denotes maltodextrin with a DE from 12 to 16, available commercially from Cargill Powder under the trade designation 'C* Dry MD 01910'.

The following ingredients may be used to prepare examples of the present invention.

### Glucose ingredients (11 to 112)

I1 (also referred to herein by the reference 'High DP4 (50%) liquid') denotes a glucose syrup that comprises 50 parts by dry weight of glucose per 100 parts by weight of the syrup, the glucose having a DP of 4 and DE of 31, the syrup being available commercially from Tereos Syral under the trade designation 'Mylose 351'.

I2 (also referred to herein by the reference 'High DP4 (50%) powder') denotes the dry form of the same glucose ingredient present in I1 and available commercially from Tereos Syral as a powder under the trade designation 'Glucodry 314'.

I3 (also referred to herein by the reference 'GS 20-23 DE powder') denotes a glucose syrup with a DE of from 20 to 23 available commercially from Roquette as a powder under the trade designation 'Glucidex 21'.

I4 (also referred to herein by the reference 'GS 27-33 DE powder') denotes a glucose syrup with a DE of from 27 to 33 available commercially from Roquette as a powder under the trade designation 'Glucidex 29'.

I5 (also referred to herein by the reference 'GS 38-42 DE powder') denotes a glucose syrup with a DE of from 38 to 42 available commercially from Roquette as a powder under the trade designation 'Glucidex 40'.

I6 (also referred to herein by the reference 'GS 38-42 DE liquid') denotes a glucose syrup with a DE of from 38 to 42 available commercially from Tereos Syral as a liquid under the trade designation 'Mylose 66N'.

I7 (also referred to herein by the reference 'GS 42-52 DE high maltose low dextrose liquid) denotes a glucose syrup with a DE of 42 to 52 and available commercially from Donauchem polska Cargill as a liquid under the trade designation 'C* Sweet M01261' I8 (also referred to herein by the reference 'GS 58-63 DE liquid') denotes a glucose syrup with a DE of from 58 to 63 available commercially from Tereos Syral as a liquid under the trade designation 'Glucoplus 361'

I9 (also referred to herein by the reference 'GS 71.5-75.5 DE liquid') denotes a glucose syrup with a DE of 74 available commercially from Tereos Syral as a liquid under the trade designation 'Glucoplus 86A'

I10 (also referred to herein by the reference 'GS 78-84 DE liquid') denotes the blend of 91.5 parts by weight of a glucose syrup with a DE of 81 and 9.5 parts by weight of fructose, the blend available commercially from Tereos Syral as a liquid under the trade designation 'Glucosweet 761'

I11 (also referred to herein by the reference 'DE31 ) denotes a glucose syrup with a DE of 31, available commercially from Tereos Syral as a liquid under the trade designation 'Mylose 351'.

I12 (also referred to herein by the reference 'DE80') denotes a glucose syrup with a DE of 80, available commercially from Tereos Syral as a liquid under the trade designation 'Glucosweet 711'.

The glucose mixtures of I1 and I2 have a significantly lower mono and di-saccharide content compared a counterpart glucose syrup such as I4 with a similar average DE value.

Based on a certificate of analysis and ingredient specifications given by the suppliers, the composition of some of these ingredients is given in the Table 3 below.

**Table 3a Analysis of sugar ingredients**

| . | DE | Liq / Pwdr | Glucose / dextrose (%DS) | Fructose (% DS) | Maltose (% DS) |
|---|---|---|---|---|---|
| C2 | 15 | Pwdr | 0 | 0 | - |
| I1 | 31 | Liq. | 3 | 0 | 6.1 |
| I2 | 31 | Pwdr | 3 | 0 | 6.1 |
| I3 | 21 | Pwdr | 1.5 | 0 | 6 |
| I4 | 29 | Pwdr | 8 | 0 | 8 |
| I5 | 40 | Pwdr | 16 | 0 | 12 |
| I6 | 42 | Liq. | 18 | 0 | 13 |
| I7 | 44 | Liq. | 1.1 | 0 | 46 to 58 |
| I8 | 60 | Liq. | 29 to 34 | 0 | 33 to 38 |
| I9 | 74 | Liq. | 50 to 56 | 0 | 25 to 32 |
| I10 | 81 | Liq. | 52.5 | 9.5 | 24.4 |

**Table 3b Analysis of sugar ingredients**

| . | DE | Liq / Pwdr | Sugars (% DS) | Maltotriose (%DS) | DP<4 (% DS) | DP≥4 (% DS) |
|---|---|---|---|---|---|---|
| C2 | 15 | Pwdr | 3.7 | - | - | 96 |
| I1 | 31 | Liq. | 8.9 | 7.5 to 15 | 15 | 81.2 |
| I2 | 31 | Pwdr | 8.9 | 7.5 to 15 | 15 | 81.2 |
| I3 | 21 | Pwdr | 7.5 | - | - | - |
| I4 | 29 | Pwdr | 16 | - | - | - |
| I5 | 40 | Pwdr | 28 | - | - | - |
| I6 | 42 | Liq. | 31 | - | - | - |
| I7 | 44 | Liq. | 50 | 19.7 | 69.7 | 30.3 |
| I8 | 60 | Liq. | 65 | 10.5 | 76 | 22 |
| I9 | 74 | Liq. | 81 | < 10 | - | - |
| I10 | 81 | Liq. | 86.4 | 8.2 | 96.2 | 3.8 |

For glucose ingredients there are some restrictions of the range of values available in each form due to hygroscopicity and viscosity limits. Ingredients with a very high DE value are generally available as liquids whereas ingredients with a very low DE value are generally available in the form of a powder.

### Examples 1 to 12 (wafer) plus comparative examples Comp A to D

Examples 1 to 12 (and comparative examples Comp A to D) unless otherwise indicated herein were prepared by mixing the above ingredients into the Comp A recipe to prepare wafer batters.

The wafers were prepared by baking the batters for 2 minutes in an oven (25-plate wafer oven, Hebenstreit Moerfelded, West Germany) between two metal plates heated to 130°C. After short cooling, samples were hydrated in climatic chambers at the desired water activity (Aw) for 15 days before mechanical testing. The Aw was measured in each sample after hydration to verify the correct hydration of the sample.

**Table 4**

| Example | Ingredient | 'x' / wt parts |
|---|---|---|
| Comp A | None | 0 |
| Comp B | C2 | 15 |
| Comp C | C2 | 12.5 |
| Comp D | C2 | 15 |
| Ex 1 | I12 | 15 |
| Ex 2 | I1 | 15 |
| Ex 3 | I2 | 12.5 |
| Ex 4 | I3 | 12.5 |
| Ex 5 | I5 | 12.5 |
| Ex 6 | I7 | 15 |
| Ex 7 | I8 | 15 |
| Ex 8 | I4 | 12.5 |
| Ex 9 | I9 | 15 |
| Ex 10 | I6 | 15 |
| Ex 11 | I8 | 15 |
| Ex 12 | I9 | 15 |

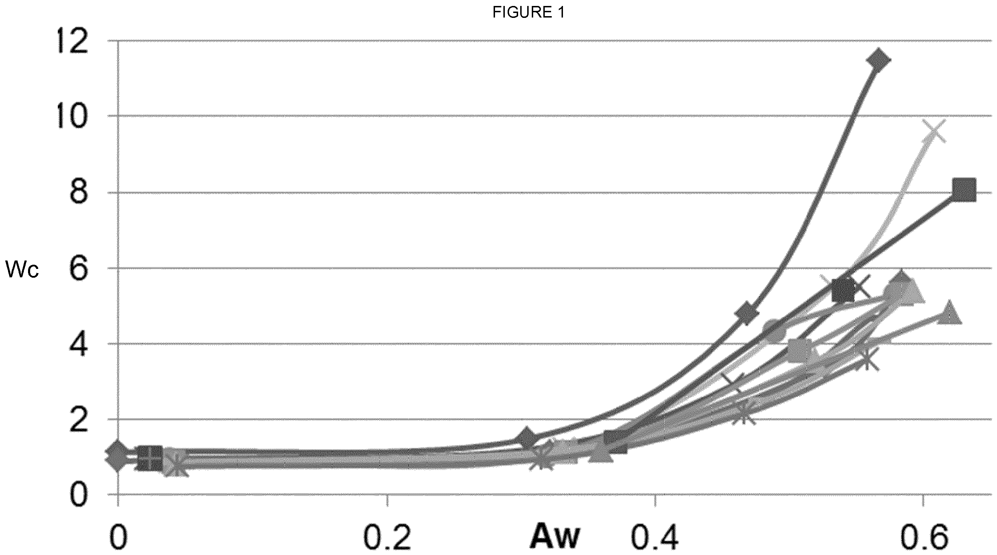

**Table 5 (Legends for Figures 1 and 5)**

| Example | Line colour and symbol |
|---|---|
| Comp A | Blue diamond |
| Comp C | Black cross |
| Comp D | Dark turquoise star |
| Ex 1 | Light blue cross |
| Ex 2 | Orange / brown circle. |
| Ex 3 | Red square |
| Ex 4 | Dark red line |
| Ex 5 | Purple diamond |
| Ex 6 | Turquoise square |
| Ex 7 | Orange triangle |
| Ex 8 | Light green line |
| Ex 9 | Dark red square |
| Ex 10 | Dark green triangle |

### Further examples and tests (Examples 13 and Comp E and F)

Otherwise identical examples of the invention (having ingredient I6, glucose syrup of DE 42) may be prepared with respectively 9, 12.5 and 15 parts by weight of I6 per 100 parts of flour (the other ingredients being in the same proportion as in Comp A.) It can be shown that examples having 9 parts of glucose syrup are as effective as 15 parts of glucose in imparting some of all of the advantages of the invention given stated herein.

It has also been found that in generally maturation of wafers of the invention to 30°C / 35 RH does not affect significantly their cardboardiness.

As can be seen from Figure 1 wafers such as Example 1 that comprise a glucose syrup of DE 80 (I12), exhibit a moisture tolerance benefit less than the other wafers of the invention. Under maturation conditions of 30°C / 50 RH and 30°C / 60 RH, carboardiness of wafers prepared according to comparative recipes is higher than the wafers of the invention and of wafers of the invention those having a sugar ingredient with DE less than 80 are preferred.

A panel of 30 showed that wafers at aw 0.55-0.56 had unacceptable cardboardiness whereas wafers tasted with Aw equal or below 0.48 had acceptable cardboardiness. Wafer cardboardiness becomes unacceptable above approximately 6 corresponding to wafer activities greater than about 0.55.

Further wafer examples were prepared as described herein and the test results are given below

**Table 6**

| Maturation conditions | 25°C / 50% RH | | 25°C 55% RH | | 25°C / 60% RH | | A_{w} |
|---|---|---|---|---|---|---|---|
| | Rank | Wc | Rank | Wc | Rank | Wc | |
| Comp E 15pts C1 | 4 | 4.9 | 1 | 4.86 | 5 | 5.37 | 0.56 |
| Comp F 5 pts Inulin HIS | 5 | 5.31 | 5 | 6 | 6 | 6.70 | 0.52 |
| Ex 13 (18 parts I9, 6 pts DE6, 12 pts DE42) | 2 | 4.14 | 4 | 4.47 | 2 | 4.89 | 0.57 |

The recipes screened were assessed by consensus tasting and ranked from 1: the crispiest to 12: the least. Table 6 shows also the Wc and Aw values to help interpret the results. At 60% RH, the wafers of the invention containing only glucose syrups (Example 13) showed a higher work of crushing than the maltodextrin containing wafer (Comp E) and the wafer containing inulin (Comp F) had a negative impact on texture (Higher Wc and lower work of crushing).

### Illustrative examples 14 to 26 (extruded cereal products)

Examples of extruded cereal products may be prepared analogously to the wafer examples herein, for example by modifying Comp B recipe analogously to the modifications of the wafer recipes given in Examples 1 to 13 to form respective compositions which can be extruded in a conventional manner to form respectively extruded cereal products Examples 14 to 26 which may exhibit similarly advantageously properties to those described herein.

### Examples 27 to 29 (wafer products)

Examples 27, 28 and 29 are further wafer recipes of the present invention.

### Example 27

**Table 7**

| Ingredients | Parts by weight | % | Kg |
|---|---|---|---|
| Flour Wheat 7.5-9.5% Protein | 100.0 | 40.50 | 80.0 |
| Water | 130.0 | 52.65 | 104.0 |
| Vegetable Oil Non-Hydrogenated | 4.00 | 1.62 | 3.20 |
| Calcium Carbonate | 0.18 | 0.07 | 0.14 |
| Glucose syrup powder DE21-23 | 12.50 | 5.06 | 10.00 |
| Sodium Bicarbonate | 0.23 | 0.09 | 0.18 |
| | 246.91 | 100.00 | 197.53 |

### Example 28

**Table 8**

| Ingredients | Parts by weight | % | Kg |
|---|---|---|---|
| Flour Wheat 7.5-9.5% Protein | 100.0 | 40.50 | 80.0 |
| Water | 132.0 | 53.46 | 105.6 |
| Vegetable Oil Non-Hydrogenated | 4.00 | 1.62 | 3.20 |
| Calcium Carbonate | 0.18 | 0.07 | 0.14 |
| Glucose syrup powder DE21-23 | 10.50 | 4.25 | 8.40 |
| Sodium Bicarbonate | 0.23 | 0.09 | 0.18 |
| | 246.91 | 99.99 | 197.52 |

### Example 29

**Table 9**

| Ingredients | Parts by weight | % | Kg |
|---|---|---|---|
| Flour Wheat 7.5-9.5% Protein | 100.0 | 40.50 | 80.0 |
| Water | 134.0 | 54.27 | 107.2 |
| Vegetable Oil Non-Hydrogenated | 4.00 | 1.62 | 3.20 |
| Calcium Carbonate | 0.18 | 0.07 | 0.14 |
| Glucose syrup powder DE21-23 | 8.50 | 3.44 | 6.80 |
| Sodium Bicarbonate | 0.23 | 0.09 | 0.18 |
| | 246.91 | 99.99 | 197.52 |

Examples of the invention (Examples 30 to 59) can be prepared following the recipes in Tables 10 to 12 below where 'wt. pt.' denotes weight parts of an ingredient, 'total sugar (or 'tot. sgr.' denotes the total of components (i) + (ii) +(iii) (where present) and 'wt% sgr' denotes weight % of a component as a percentatge of 'tot. sgr' being 100%.

### Batter Examples 30 to 39

Batters suitable for preparing baked wafers of the present invention may be prepared in a conventional manner from the following recipes given in Table 10 to which water is mixed with these ingredients in an amount of 130 parts water by weight of the flour.

**Table 10**

| Batter Ex | (i) Flour Wt pt | Total Sugar wt pt | (i) Low MW Saccharide | | | | (ii) Med MW Saccharide | | | | (iv) High MW Saccharide | | | |
|---|---|---|---|---|---|---|---|---|---|---|---|---|---|---|
| | | | wt%sgr | Mₙ | M_{w} | DE | wt%sgr | Mₙ | M_{w} | DE | wt%sgr | Mₙ | M_{w} | DE |
| 30 | 100 | 13 | 10 | 150 | 100 | 20 | 90 | 500 | 410 | 20 | - | - | - | - |
| 31 | 100 | 10 | 50 | 350 | 400 | 70 | 50 | 1500 | 1800 | 70 | - | - | - | - |
| 32 | 100 | 8 | 15 | 280 | 250 | 35 | 85 | 800 | 750 | 35 | - | - | - | - |
| 33 | 100 | 5 | 30 | 330 | 350 | 50 | 70 | 1000 | 1200 | 50 | - | - | - | - |
| 34 | 100 | 13 | 20 | 200 | 250 | 20 | 80 | 600 | 500 | 20 | - | - | - | - |
| 35 | 100 | 11 | 35 | 340 | 380 | 60 | 65 | 1200 | 1600 | 60 | - | - | - | - |
| 36 | 100 | 7 | 25 | 270 | 260 | 50 | 75 | 550 | 450 | 55 | - | - | - | - |
| 37 | 100 | 6 | 30 | 300 | 280 | 40 | 70 | 1300 | 1100 | 65 | - | - | - | - |
| 38 | 100 | 14 | 25 | 360 | 410 | 30 | 60 | 900 | 800 | 60 | 15 | 0 | 0 | 60 |
| 39 | 100 | 3 | 10 | 180 | 200 | 45 | 80 | 1000 | 900 | 75 | 10 | 0 | 0 | 75 |

### Wafer Product Examples 40 to 49

Baked wafers of the present invention may be prepared in a conventional manner from the following recipes given in Table 11.

**Table 11**

| Wafer Ex | (i) Flour Wt pt | Total Sugar wt pt | (i) Low MW Saccharide | | | | (ii) Med MW Saccharide | | | | (iv) High MW Saccharide | | | |
|---|---|---|---|---|---|---|---|---|---|---|---|---|---|---|
| | | | wt%sgr | Mₙ | M_{w} | DE | wt%sgr | Mₙ | M_{w} | DE | wt%sgr | Mₙ | M_{w} | DE |
| 40 | 100 | 13 | 10 | 150 | 100 | 20 | 90 | 500 | 410 | 20 | - | - | - | - |
| 41 | 100 | 10 | 50 | 350 | 400 | 70 | 50 | 1500 | 1800 | 70 | - | - | - | - |
| 42 | 100 | 8 | 15 | 280 | 250 | 35 | 85 | 800 | 750 | 35 | - | - | - | - |
| 43 | 100 | 5 | 30 | 330 | 350 | 50 | 70 | 1000 | 1200 | 50 | - | - | - | - |
| 44 | 100 | 13 | 20 | 200 | 250 | 20 | 80 | 600 | 500 | 20 | - | - | - | - |
| 45 | 100 | 11 | 35 | 340 | 380 | 60 | 65 | 1200 | 1600 | 60 | - | - | - | - |
| 46 | 100 | 7 | 25 | 270 | 260 | 50 | 75 | 550 | 450 | 55 | - | - | - | - |
| 47 | 100 | 6 | 30 | 300 | 280 | 40 | 70 | 1300 | 1100 | 65 | - | - | - | - |
| 48 | 100 | 14 | 25 | 360 | 410 | 30 | 60 | 900 | 800 | 60 | 15 | 0 | 0 | 60 |
| 49 | 100 | 3 | 10 | 180 | 200 | 45 | 80 | 1000 | 900 | 75 | 10 | 0 | 0 | 75 |

### Extruded Cereal Product Examples 50 to 59

Extruded cereal products of the present invention may be prepared in a conventional manner from the following recipes given in Table 12.

| Extruded Ex | (i) Flour Wt pt | Total Sugar wt pt | (i) Low MW Saccharide | | | | (ii) Med MW Saccharide | | | | (iv) High MW Saccharide | | | |
|---|---|---|---|---|---|---|---|---|---|---|---|---|---|---|
| | | | wt%sgr | Mₙ | M_{w} | DE | wt%sgr | Mₙ | M_{w} | DE | wt%sgr | Mₙ | M_{w} | DE |
| 50 | 100 | 13 | 10 | 150 | 100 | 20 | 90 | 500 | 410 | 20 | - | - | - | - |
| 51 | 100 | 10 | 50 | 350 | 400 | 70 | 50 | 1500 | 1800 | 70 | - | - | - | - |
| 52 | 100 | 8 | 15 | 280 | 250 | 35 | 85 | 800 | 750 | 35 | - | - | - | - |
| 53 | 100 | 5 | 30 | 330 | 350 | 50 | 70 | 1000 | 1200 | 50 | - | - | - | - |
| 54 | 100 | 13 | 20 | 200 | 250 | 20 | 80 | 600 | 500 | 20 | - | - | - | - |
| 55 | 100 | 11 | 35 | 340 | 380 | 60 | 65 | 1200 | 1600 | 60 | - | - | - | - |
| 56 | 100 | 7 | 25 | 270 | 260 | 50 | 75 | 550 | 450 | 55 | - | - | - | - |
| 57 | 100 | 6 | 30 | 300 | 280 | 40 | 70 | 1300 | 1100 | 65 | - | - | - | - |
| 58 | 100 | 14 | 25 | 360 | 410 | 30 | 60 | 900 | 800 | 60 | 15 | 0 | 0 | 60 |
| 59 | 100 | 3 | 10 | 180 | 200 | 45 | 80 | 1000 | 900 | 75 | 10 | 0 | 0 | 75 |

## Claims

1. A baked wafer product; where the product comprises
(i) flour;
(ii) a first, low molecular weight fraction of one or more saccharides with a number average molecular weight of less than 350 g/mol, present in an amount of no more than 10 parts by weight per 100 parts by weight of the flour;
(iii) a second, medium molecular weight fraction of one or more saccharides with a number average molecular weight of from 350 to 1600 g/mol;
;where
(a) components (ii) and (iii) are derived and/or derivable from starch;
(b) components (ii) and (iii) together have a dextrose equivalence (DE) of at least 20; and
(c) components (ii) and (iii) together are present in a total amount of at least 8 parts and no more than 30 parts by weight per 100 parts by weight of the flour; and where the product has:
a no or low content of simple sugars of less than 10% by weight of the total product;,
wherein the simple sugars are monosaccharides glucose/dextrose, fructose and galactose; and the disaccharides sucrose, maltose and lactose, wherein components (ii) and/or (iii) comprises glucose syrups having a DE from 20 to 70; and wherein the product is a wafer having a density of from 0.1 to 0.3 g(cm)⁻³.

2. A wafer according to claim 1 wherein components (ii) and/or (iii) is derived from corn, wheat, rice, potatoes or cassava.

3. A wafer according to claim 2 wherein components (ii) and/or (iii) are derived from corn.

4. A wafer according to any preceding claim wherein the wafer does not contain extrinsic α-amylase, maltodextrin and inulin hydrolysate

5. A wafer according to any preceding claim where when the product has an initial water activity (A_{w}) from 0.3 to 0.65, an increase of 0.1 in water activity (A_{w}) results in an increase in the work of crispiness (W_{c}) of less than 2.0 N.mm, wherein Wc is measured using the following protocol:
six disks are cut out of the wafer or extruded cereal product using a circular cutting tool of radius 2cm and eight stacks of six disks are made, a Texture Analyser TA.HD, Stable Micro Systems, England; load cell 50 kg; 4mm diameter cylinder stainless probe; penetration rate 1mm/s; distance 8mm, trigger force greater than 0.5N; acquisition rate 500 points per second is pressed into the stack, and records force drops of greater than 0.2N, the test is repeated until a total of 8 repetitions are obtained and W_{c} is measured in units of Newton millimetres and defined as: ${W}_{c} = \frac{A}{No}$
where
No = total number of peaks,
A = Area under the force-deformation curve (N.mm).

6. A wafer batter comprising water and components (i) to (iii) as described in an proceeding claim.

7. A food product comprising a wafer according to any of claims 1 to 5 and another edible material.

8. A food product according to claim 7, wherein the other edible material is a confectionery, savoury or pet food material.

9. A food product according to claim 7 or 8, wherein one or more of the other edible materials are included as a filling for the wafer.

10. A food product according to claim 7 to 9, wherein the wafer is the centre or part of the centre of a confectionery or savoury product or a pet food.

11. A food product according to any of claims 7 to 10, wherein the wafer is in direct contact with the food material in the absence of a moisture barrier.

12. Method for making a wafer as described in any of claims 1 to 5 comprising the steps of:
a) mixing at least water, flour (i) and low molecular weight components (ii) and medium molecular weight (iii) to form a batter as claimed in claim 6, and
b) baking the batter on at least one hot surface or heating by other means;
to produce a baked wafer product.

## Patentansprüche

1. Gebackenes Waffelprodukt; wobei das Produkt umfasst
(i) Mehl;
(ii) eine erste Fraktion mit niedrigem Molekulargewicht von einem oder mehreren Sacchariden mit einem zahlenmittleren Molekulargewicht von weniger als 350 g/Mol, die in einer Menge von nicht mehr als 10 Gewichtsteilen pro 100 Gewichtsteile des Mehls vorhanden ist;
(iii) eine zweite Fraktion mit mittlerem Molekulargewicht eines oder mehrerer Saccharide mit einem zahlenmittleren Molekulargewicht von 350 bis 1600 g/Mol;
wobei
(a) die Komponenten (ii) und (iii) aus Stärke gewonnen und/oder gewinnbar sind;
(b) die Komponenten (ii) und (iii) zusammen ein Dextroseäquivalent (DE) von mindestens 20 aufweisen; und
(c) die Komponenten (ii) und (iii) zusammen in einer Gesamtmenge von mindestens 8 Gewichtsteilen und nicht mehr als 30 Gewichtsteilen pro 100 Gewichtsteile des Mehls vorhanden sind; und wobei das Produkt aufweist:
keinen oder einen geringen Gehalt an Einfachzuckern von weniger als 10 Gew.-% des Gesamtprodukts;, wobei die Einfachzucker die Monosaccharide Glucose/Dextrose, Fructose und Galactose; und die Disaccharide Saccharose, Maltose und Lactose sind, wobei die Komponenten (ii) und/oder (iii) Glucosesirupe, die ein DE von 20 bis 70 aufweisen, umfassen; und wobei das Produkt eine Waffel, die eine Dichte von 0,1 bis 0,3 g(cm)⁻³ aufweist, ist.

2. Waffel nach Anspruch 1, wobei die Komponenten (ii) und/oder (iii) aus Mais, Weizen, Reis, Kartoffeln oder Maniok gewonnen werden.

3. Waffel nach Anspruch 2, wobei die Komponenten (ii) und/oder (iii) aus Mais gewonnen werden.

4. Waffel nach einem der vorstehenden Ansprüche, wobei die Waffel kein(e) extrinsische α-Amylase, Maltodextrin und Inulinhydrolysat enthält.

5. Waffel nach einem der vorstehenden Ansprüche, wobei, wenn das Produkt eine anfängliche Wasseraktivität (A_{w}) von 0,3 bis 0,65 aufweist, eine Erhöhung der Wasseraktivität (A_{w}) um 0,1 zu einer Erhöhung bei der Erzeugung einer Knusprigkeit (W_{c}) von weniger als 2,0 N.mm führt, wobei Wc unter Verwendung des folgenden Protokolls gemessen wird:
sechs Scheiben werden unter Verwendung eines kreisförmigen Schneidewerkzeugs mit einem Radius von 2 cm aus der Waffel oder dem extrudierten Getreideprodukt ausgeschnitten, und acht Stapel aus sechs Scheiben werden hergestellt, ein Texturanalysator TA.HD, Stable Micro Systems, England; Kraftmessglied 50 kg; zylindrische Edelstahlsonde mit 4 mm Durchmesser; Eindringgeschwindigkeit 1 mm/s; Abstand 8 mm, Auslösekraft größer als 0,5 N; Erfassungsrate von 500 Punkten pro Sekunde wird in den Stapel gedrückt und Kraftabfälle von mehr als 0,2 N werden aufzeichnet, wobei der Test wiederholt wird, bis insgesamt 8 Wiederholungen erhalten werden, und W_{c} in Einheiten von Newton-Millimetern gemessen und definiert wird als: ${W}_{c} = {A}_{_}$
No
wobei No = Gesamtanzahl von Peaks,
A = Fläche unter der Kraftverformungskurve (N.mm).

6. Waffelteig, umfassend Wasser und die Komponenten (i) bis (iii), wie in einem vorstehenden Anspruch beschrieben.

7. Nahrungsmittelprodukt , umfassend eine Waffel nach einem der Ansprüche 1 bis 5 und ein weiteres essbares Material.

8. Nahrungsmittelprodukt nach Anspruch 7, wobei das weitere essbare Material ein Süßwaren-, ein herzhaftes oder ein Tiernahrungsmittelmaterial ist.

9. Nahrungsmittelprodukt nach Anspruch 7 oder 8, wobei eines oder mehrere der weiteren essbaren Materialien als eine Füllung für die Waffel eingeschlossen sind.

10. Nahrungsmittelprodukt nach Anspruch 7 bis 9, wobei die Waffel das Zentrum oder ein Teil des Zentrums eines Süßwaren- oder herzhaften Produkts oder eines Tiernahrungsmittels ist.

11. Nahrungsmittelprodukt nach einem der Ansprüche 7 bis 10, wobei die Waffel in der Abwesenheit einer Feuchtigkeitssperre in direktem Kontakt mit dem Nahrungsmittelmaterial steht.

12. Verfahren zum Herstellen einer Waffel, wie in einem der Ansprüche 1 bis 5 beschrieben, umfassend die Schritte:
a) Mischen von mindestens Wasser, Mehl (i) und Komponenten mit niedrigem Molekulargewicht (ii) und mittlerem Molekulargewicht (iii), um einen Teig, wie in Anspruch 6 beansprucht, auszubilden, und
b) Backen des Teigs auf mindestens einer heißen Oberfläche oder Erhitzen durch andere Mittel;
um ein gebackenes Waffelprodukt zu produzieren.

## Revendications

1. Produit de gaufrette cuite au four ; où le produit comprend
(i) de la farine ;
(ii) une première fraction de masse moléculaire faible d'un ou de plusieurs saccharides ayant une masse moléculaire moyenne en nombre inférieure à 350 g/mol, présente en une quantité ne dépassant pas 10 parties en poids pour 100 parties en poids de la farine ;
(iii) une seconde fraction de masse moléculaire moyenne d'un ou de plusieurs saccharides ayant une masse moléculaire moyenne en nombre allant de 350 à 1 600 g/mol ;
où
(a) les composants (ii) et (iii) sont dérivés et/ou peuvent être dérivés de l'amidon ;
(b) les composants (ii) et (iii) ensemble ont une équivalence en dextrose (DE) d'au moins 20 ; et
(c) les composants (ii) et (iii) ensemble sont présents en une quantité totale d'au moins 8 parties et de pas plus de 30 parties en poids pour 100 parties en poids de la farine ; et où le produit a :
une teneur nulle ou faible en sucres simples inférieure à 10 % en poids du produit total ;, dans lequel les sucres simples sont les monosaccharides glucose/dextrose, fructose et galactose ; et les disaccharides saccharose, maltose et lactose, dans lequel les composants (ii) et/ou (iii) comprennent des sirops de glucose ayant une DE allant de 20 à 70 ; et dans lequel le produit est une gaufrette ayant une masse volumique allant de 0,1 à 0,3 g(cm)⁻³.

2. Gaufrette selon la revendication 1, dans laquelle les composants (ii) et/ou (iii) sont dérivés de maïs, de blé, de riz, de pommes de terre ou de manioc.

3. Gaufrette selon la revendication 2, dans laquelle les composants (ii) et/ou (iii) sont dérivés de maïs.

4. Gaufrette selon l'une quelconque revendication précédente, dans laquelle la gaufrette ne contient pas d'α-amylase, de maltodextrine et d'hydrolysat d'inuline.

5. Gaufrette selon l'une quelconque revendication précédente, où, lorsque le produit a une activité d'eau (A_{w}) initiale allant de 0,3 à 0,65, une augmentation de 0,1 de l'activité d'eau (A_{w}) entraîne une augmentation du travail de texture croustillante (W_{c}) inférieure à 2,0 N.mm, dans laquelle Wc est mesuré à l'aide du protocole suivant :
six disques sont découpés de la gaufrette ou du produit céréalier extrudé à l'aide d'un outil de coupe circulaire d'un rayon de 2 cm et huit piles de six disques sont fabriquées, un analyseur de texture TA.HD, Stable Micro Systems, Angleterre ; cellule de charge de 50 kg ; sonde inoxydable cylindrique de 4 mm de diamètre ; taux de pénétration de 1 mm/s ; distance de 8 mm, force de déclenchement supérieure à 0,5 N ; taux d'acquisition de 500 points par seconde, est pressé dans la pile, et enregistre des chutes de force supérieures à 0,2 N, le test est répété jusqu'à ce qu'un total de 8 répétitions soit obtenu et W_{c} est mesuré en unités de newton-millimètres et défini comme : $Wc = \frac{A}{No}$
où
No = nombre total de pics,
A = aire sous la courbe force-déformation (N.mm).

6. Pâte à gaufrettes comprenant de l'eau et des composants (i) à (iii) tels que décrits dans une revendication précédente.

7. Produit alimentaire comprenant une gaufrette selon l'une quelconque des revendications 1 à 5 et une autre matière comestible.

8. Produit alimentaire selon la revendication 7, dans lequel l'autre matière comestible est une matière de confiserie, salée ou alimentaire pour animaux de compagnie.

9. Produit alimentaire selon la revendication 7 ou 8, dans lequel une ou plusieurs des autres matières comestibles sont inclues en guise de remplissage pour la gaufrette.

10. Produit alimentaire selon la revendication 7 à 9, dans lequel la gaufrette est le centre ou une partie du centre d'un produit de confiserie ou salé ou d'un aliment pour animaux de compagnie.

11. Produit alimentaire selon l'une quelconque des revendications 7 à 10, dans lequel la gaufrette est en contact direct avec la matière alimentaire en l'absence de barrière contre l'humidité.

12. Procédé de fabrication d'une gaufrette tel que décrit dans l'une quelconque des revendications 1 à 5, comprenant les étapes consistant à :
a) mélanger au moins de l'eau, de la farine (i) et des composants de masse moléculaire faible (ii) et de masse moléculaire moyenne (iii) pour former une pâte selon la revendication 6, et
b) cuire la pâte au four sur au moins une surface chaude ou la chauffer par d'autres moyens ;
pour produire un produit de gaufrette cuite au four.
